# EUROPEAN PATENT APPLICATION

(11) **EP 4 708 168 A1**
(43) Date of publication of application: **11.03.2026**
(21) Application number: 25199748.2
(22) Date of filing: 02.09.2025
(51) Int. Cl.: G06Q 10/087

(54) **SYSTEMS FOR AND METHODS FOR COMPLIANCE CONSTRAINED PREDICTIVE MODELING**

(30) Priority: 04.09.2024 US 202463690361 P; 04.09.2024 US 202463690376 P; 04.09.2024 US 202463690386 P
(71) Applicant: Groundswell, Mclean Virginia 22102 (US)
(72) Inventor: POMMER, John, McLean 22102 (US); PETERS, Toralf, McLean 22102 (US)
(74) Representative: Murgitroyd & Company

(57) **Abstract**

A computing device obtains a spatial map comprising storage locations for a (first) chemical product in a magazine. The spatial map includes product or storage location attributes of a spatial dimension, attributes of explosive yield, and restrictions on spatial dimensions differentiated by logistical reasoning codes. The device obtains an identity of another (second) chemical product for storage in the magazine and attributes. The device may generate, using the spatial map, a user interface for spatial dimensions of the magazine. The user interface may include an indication of storage locations for chemical or volatile products; and an indication of second (or restricted) storage locations according to predefined storage location selection criteria; and a selectable control element which, upon selection, maps the second chemical product to a restricted location. The device may update the spatial map responsive to the selection of the control element, to assign chemical product to a restricted location.

## Description

### CROSS-REFERENCE TO RELATED APPLICATIONS

This application claims the benefit of and priority to U.S. Provisional Applications No. 63/690,361; 63/690,376; and 63/690,386, filed September 4, 2024, each of which is hereby incorporated by reference in their entirety.

### TECHNICAL FIELD

This disclosure generally relates to objective function-based inventory management of chemically volatile products, such as ordinance, explosives, or precursors therefor.

### BACKGROUND

A magazine can store chemical products such as ordinance, explosives, or precursors therefor. For example, a magazine can include permanent structures such as buildings or bunkers, trailers, or other portions to store the chemical products. The magazine may be constructed to contain a blast, such as a maximum credible event based on the contents thereof. Further, the magazine may be constructed to support flexibility of use, according to various training exercises, or potentialities for operational uses (e.g., kinetic operations). Accordingly, a magazine can include various chemical products such as, for example, sea mines, small arms cartridges, or construction explosives.

Placement of magazine contents can impact logistical operations. The placement may be traced according to an enterprise resource tool. In a magazine including many structures, co-locating chemical products of a same type (e.g., 7.62 mm cartridges or 120 mm sabot rounds) within one structure, or a few proximal structures it may aid pick or place operations. However, such co-location may complicate adherence to storage constraints, such as maximum yields for a particular structure of the magazine (e.g., as may be related to a blast containment design limit of the structure). Moreover, items having one or more same part numbers may nonetheless be allocated to different purposes (e.g., training or operational contingencies), and traceability of a chemical products history can impact a future use or the storage constraints themselves. Further still, according to certain of the training or operational contingencies, a magazine may be overprovisioned relative to storage constraints, for at least a period of time. Enterprise resource tools are ill-equipped to trace such behavior. Improvements in the art are desired.

### SUMMARY

A computer can execute enterprise resource planning (ERP) software to manage inventory, assignment, or distribution of chemical products such as explosives, ordinance, ammunition, or precursors therefor. The ERP software can implement a spatial map to store locations of various chemical products stored in a magazine. For example, the magazine can refer to or include one or more permanent or temporary structures configured to store chemical products (e.g., the explosives, ordinance, ammunition, or precursors therefor). The spatial map can include attribute data for each of the stored chemical products. For example, the attributes can include spatial dimensions, explosive yields, assigned locations, interactions with other chemical products, and traceability information (e.g., one or more identifiers) including a manufacturer, lot number, record of any responsible parties, storage conditions, and so forth.

A computer can generate a GUI indicating various information of or derived from the spatial map. For example, in some embodiments, the GUI can include indications of a conformance of one or more potential storage locations for a chemical product with storage location selection criteria, and can manage conformations exceptions, such as according to management of electronic waivers for storage of certain chemical products. The computer can execute an objective function to select storage locations to store received chemical products, or retrieve stored chemical products from. In some embodiments, the stored or received chemical products can include either or both of explosives, ordinance, or ammunition, or brass, expended tubes, or other residue of the explosives, ordinance, or ammunition.

In one embodiment, a computer-implemented method is provided. The method can be performed by a computer. The method includes obtaining a spatial map including first storage locations corresponding to first chemical products of a magazine. The spatial map includes a first attribute of a spatial dimension and a second attribute of an explosive yield for the first chemical products. The method includes obtaining an identity of a second chemical product received for storage in the magazine and a first attribute and second attribute for the second chemical product. The method includes generating, using the spatial map, a graphical user interface (GUI) corresponding to at least two spatial dimensions of the magazine. The GUI includes an indication of the first storage locations for the first chemical products and one or more second storage locations. The GUI includes an indication of at least one of the second storage locations as restricted according to predefined storage location selection criteria using the first and second attributes. The GUI includes a selectable control element which, upon selection, maps the second chemical product to a restricted location. The method includes updating the spatial map by the computer responsive to a selection of the control element, to assign the second chemical product to the restricted location.

In some aspects, the techniques described herein relate to a computer-implemented method, wherein the selectable control element includes a sub element configured to receive a waiver.

In some aspects, the techniques described herein relate to a computer-implemented method, wherein the selectable control element corresponds to a predefined duration of the waiver.

In some aspects, the techniques described herein relate to a computer-implemented method, wherein the first chemical products and the second chemical product include ordinance, an explosive, or a precursor for the ordinance or the explosive.

In some aspects, the techniques described herein relate to a computer-implemented method, further including: selecting, by the computer, the one or more second storage locations based on a comparison between: a threshold of a containment level for a portion of the magazine; and a sum of the explosive yield of the second chemical product with the explosive yield of a plurality of the first chemical products diposed in the portion of the magazine according to the spatial map.

In some aspects, the techniques described herein relate to a computer-implemented method, wherein: the magazine includes a plurality of structures; and the spatial map includes corresponding containment levels for each of the plurality of structures.

In some aspects, the techniques described herein relate to a computer-implemented method, wherein: the plurality of structures includes a temporary structure and a permanent structure.

In some aspects, the techniques described herein relate to a computer-implemented method, wherein selecting the storage location includes a compatibility check between a type of one or more of the first chemical products with a type of the second chemical product.

In some aspects, the techniques described herein relate to a computer-implemented method, further including: executing, by the computer, an objective function to maximize a density of like chemical products in the magazine.

In some aspects, the techniques described herein relate to a computer-implemented method, wherein the like chemical products share an identifier. The shared identifier may include at least one of a national stock number, a lot number, or a manufacturer number.

In some aspects, the techniques described herein relate to a computer-implemented method, further including: detecting, by the computer, a loss of connectivity between a computer implementing the computer-implemented method and a remote server; updating, by the computer, locally, the spatial map to correspond to removals of the second chemical products or additions of third chemical products; and communicating, by the computer, responsive to a detected restoration of the connectivity, the updated spatial map to the remote server.

In one embodiment, another computer-implemented method is provided. The method can be performed by a computer. The method includes obtaining a spatial map including first storage locations corresponding to first chemical products of a magazine. The spatial map includes a first attribute of a spatial dimension and a second attribute of an explosive yield, for the first chemical products. The method includes obtaining an identity of a second chemical product received for storage in the magazine and a first attribute and second attribute for the second chemical product. The method includes determining a match between an identifier for the second chemical product and one or more of the first chemical products. The method includes comparing a sum of the explosive yield of the first chemical products and an explosive yield for the second chemical product to threshold. The method includes selecting a storage location based on the match, the comparison to the threshold, and the spatial dimensions of the first chemical products and the second chemical product. The method includes generating a graphical user interface (GUI) corresponding to at least two spatial dimensions of the magazine. The GUI includes the selected location and the first storage locations.

In some aspects, the techniques described herein relate to a computer-implemented method, wherein the chemical product includes ordinance, an explosive, or a precursor for the ordinance or the explosive.

In some aspects, the techniques described herein relate to a computer-implemented method, wherein the GUI depicts an indication of compliance of the selected location with a predefined set of selection criteria.

In some aspects, the techniques described herein relate to a computer-implemented method, wherein the GUI includes a selectable control element which, upon selection, selects a storage location contrary to the predefined storage location selection criteria, the selectable control element including a sub element to receive a waiver for the criteria.

In some aspects, the techniques described herein relate to a computer-implemented method, wherein: the magazine includes a plurality of structures; and the spatial map includes corresponding containment levels for each of the plurality of structures.

In some aspects, the techniques described herein relate to a computer-implemented method, wherein: the plurality of structures includes a temporary structure of a trailer and a permanent structure.

In some aspects, the techniques described herein relate to a computer-implemented method, further including: obtaining, by the computer, an identity of a third chemical product for retrieval from the magazine, a first attribute, and second attribute for the third chemical product; determining, by the computer, a second match between an identifier for the third chemical product and one or more of the first chemical products; selecting, by the computer, a second storage location based on the match, and the spatial dimensions of the first chemical products and the third chemical product; updating by the computer, responsive to the selection of the second storage location, the spatial map to omit the third chemical product from the second storage location; and generating, by the computer, based on the updated spatial map, a second instance of the graphical user interface (GUI) corresponding to at least two spatial dimensions of the magazine, the GUI indicating the second storage location as unoccupied.

In some aspects, the techniques described herein relate to a computer-implemented method, wherein the spatial map correlates the third chemical product to: an identity of a receiver of the third chemical product; an identity of a manufacturer of the third chemical product; a received condition of the third chemical product; and a lot number for the third chemical product, wherein the selection of the third chemical product is based on the receiver, the manufacturer, the received condition, and the lot number.

In some aspects, the techniques described herein relate to a computer-implemented method, wherein selecting the storage location includes a compatibility check between a type of one or more of the first chemical products with a type of the second chemical product.

In one embodiment, yet another computer-implemented method is provided. The method can be performed by a computer. The method includes obtaining a spatial map including attributes for each of multiple chemical products of a magazine. The attributes include a first attribute of a spatial dimension, a second attribute of an explosive yield, and a third attribute of a storage location. The method includes obtaining a first request to withdraw a first of the chemical products from the magazine. The first request includes an intended use for the first of the chemical products and a first requester. The method includes identifying a first of the storage locations for the first of the chemical products by the computer, based on the first request, the first attribute, the second attribute, a withdrawer, the first requester, a condition upon withdrawal, and a unique identifier. The method includes generating, by the computer using the spatial map, a first instance of a graphical user interface (GUI) corresponding to at least two spatial dimensions of the magazine, the GUI indicating, with elevated prominence, the first of the storage locations. The method includes obtaining a second request to store the first of the chemical products in the magazine. The second request includes an updated condition of the first of the chemical products and a second requester. The method includes generating, using the spatial map, a second instance of the GUI indicating, with elevated prominence, a second of the storage locations selected based on the updated condition of the first of the chemical products.

In some aspects, the techniques described herein relate to a computer-implemented method, wherein the chemical products include ordinance.

In some aspects, the techniques described herein relate to a computer-implemented method, wherein the spatial map correlates, with each of the chemical products: a total quantity of the ordinance, an expended quantity of the ordinance, an unexpended quantity of the ordinance, and a unit designator for a receiver of the first chemical product.

In some aspects, the techniques described herein relate to a computer-implemented method, wherein: the intended purpose corresponds to one of training exercises or kinetic operations.

In some aspects, the techniques described herein relate to a computer-implemented method, wherein: each of the chemical products stored in the magazine are designated for use in the training exercises or the kinetic operations; and the user interface includes a control element configured to receive an instruction to reallocate ordinance between the training exercises and the kinetic operations.

In some aspects, the techniques described herein relate to a computer-implemented method, further including: comparing, by the computer, a sum of the explosive yield of the first chemical products and an explosive yield for the second chemical product to a threshold; selecting, by the computer, the second of the storage locations based on the match, the comparison to the threshold, and the spatial dimensions of the first chemical products and the second chemical product.

In some aspects, the techniques described herein relate to a computer-implemented method, wherein the selection of the first storage location is based on the threshold for the portion of the magazine including the first storage location.

In some aspects, the techniques described herein relate to a computer-implemented method, wherein: the magazine includes a plurality of structures; and the spatial map includes corresponding containment levels for each of the plurality of structures.

In some aspects, the techniques described herein relate to a computer-implemented method, wherein: the plurality of structures includes a temporary structure of a trailer.

### BRIEF DESCRIPTION OF THE DRAWINGS

Various objects, aspects, features, and advantages of the disclosure will become more apparent and better understood by referring to the detailed description taken in conjunction with the accompanying drawings, in which reference characters identify corresponding elements throughout. In the drawings, like reference numbers generally indicate identical, functionally similar, and/or structurally similar elements.
**FIG. 1** is an example of a system for the management of chemical products, such as explosives, ordinance, or precursors therefor, according to some embodiments.
**FIG. 2** is a top view of an example magazine, according to some embodiments.
**FIG. 3** is an example of a graphical user interface instance providing a two-dimensional view of a magazine portion, according to some embodiments.
**FIG. 4** depicts an explosive status report generated using spatial map data, according to some embodiments.
**FIG. 5** depicts a variety of fields related to explosive storage, according to some embodiments.
**FIG. 6** depicts one example of a user interface instance, according to various embodiments.
**FIG. 7** depicts another example of a user interface instance, according to various embodiments.
**FIG. 8** depicts an example flow of messages related to compliance checking, according to various embodiments.
**FIG. 9** depicts an example flow chart for a method of chemical product storage, according to various embodiments.
**FIG. 10** depicts another example flow chart for a method of chemical product storage, according to various embodiments.
**FIG. 11** depicts an example flow chart for a method of chemical product storage, according to various embodiments.
**FIG. 12** depicts another example flow chart for a method of chemical product storage, according to various embodiments.
**FIG. 13** depicts yet another example flow chart for a method of chemical product storage, according to various embodiments.
**FIG. 14** is a block diagram illustrating an architecture for a computer system that can be employed to implement elements of the systems and methods described and illustrated herein.
**FIG. 15** depicts an example flow diagram for operations of a data processing system, according to various embodiments.

The details of various embodiments of the methods and systems are set forth in the accompanying drawings and the description below.

### DETAILED DESCRIPTION

Reference will now be made to the illustrative embodiments illustrated in the drawings, and specific language will be used here to describe the same. It will nevertheless be understood that no limitation of the scope of the invention is thereby intended. Alterations and further modifications of the inventive features illustrated here, and additional applications of the principles of the inventions as illustrated here, which would occur to a person skilled in the relevant art and having possession of this disclosure, are to be considered within the scope of the invention.

A spatial map includes a data structure, database records, or other form of machine-readable computer files that store locations of various chemical or volatile products stored, for example, in a physical storage location such as a magazine. The spatial map can include attribute data for each of the stored chemical product. For example, the attributes can include spatial dimensions, explosive yields, assigned locations, interactions with other chemical products, and traceability information including a manufacturer, lot number, record of any responsible parties, storage conditions, and so forth. A computer can generate a GUI indicating various information of or derived from the spatial map. For example, in some embodiments, the GUI can include indications of a conformance of one or more potential storage locations for a chemical product based on storage location selection criteria.

In some embodiments, the GUI can provide a selection of a storage location which does not conform to the selection criteria, referred to as a non-conforming storage location. In some instances, the non-conforming location is referred to as a restricted location, without limiting effect. A user can select, via user interface, a non-conforming storage location. In some embodiments, the GUI can provide a control element to allow an authorized user to select the non-conforming location. The control element can include, for example, an indication of an authorizer for the exception, or a sub-element to receive a waiver corresponding to the non-conforming location. A computing device coupled with the GUI can monitor a duration of the waiver or other authorization, as well as a duration of non-conformation storage to generate a notification of non-conformance (e.g., upon an expiration of the waiver or other authorization).

In some embodiments, a computer can obtain a chemical product received for storage in the magazine. The computer can determine a match of any like chemical products already stored in the magazine. For example, the like chemical products can share a national stock number (NSN), department of defense identification code (DODIC), lot number, item type, or another identifier. The computer can further determine an explosive yield of the chemical product received for storage, in combination with various of the chemical products already stored in the magazine. The computer can select storage locations based on the match(es), as well as the combined yield. For example, the computer can execute an objective function configured to densify like chemical products within a portion of a magazine, while managing the combined yield relative to a threshold. The threshold can correspond to a design containment level of a magazine portion. The threshold may be implemented as a hard or soft constraint of the objective function, according to various implementations or operational cases. The computer can generate a graphical user interface representing a two-or three-dimensional instance of the magazine and including the selected storage location. In some embodiments, the computer can generate various prompts for the user interface as may solicit responses to aid with, or confirm, a selection of at least one storage location.

In some embodiments, the computer is configured to generate for display, via the GUI, prompts for user input of information related to a chemical product requested for withdrawal from the magazine. In some embodiments, the computer is configured to otherwise obtain at least a portion of the information related to the chemical product. The information related to the chemical product can include, for example, spatial dimensions, explosive yields, intended uses, and a requester of the storage for the chemical product. The information related to the chemical product can depend on the condition and type of the chemical product. For example, a chemical product can include a palletized collection of ordinance, or a partially expended pallet, having a different explosive yield and spatial dimensions. The computer can be networked with various further computers of various further magazines to receive further information related to the chemical product. For example, the further information can associate quality escapes with a manufacturer or lot number, or traceable history related to a storage condition or storage time in a different magazine. The computer can select a stored instance of a chemical product and provide a GUI instance indicating a storage location of the selected chemical product. Thereafter, the computer can obtain a second request to store the withdrawn chemical product, the request including an indication of a condition differing from the withdrawn condition. The computer can determine a different storage location based on the differing condition and present an indication of the different storage location via a second instance of the GUI. The various instances of the GUI can include a depiction of a two- or three-dimensional instance of the magazine including storage locations.

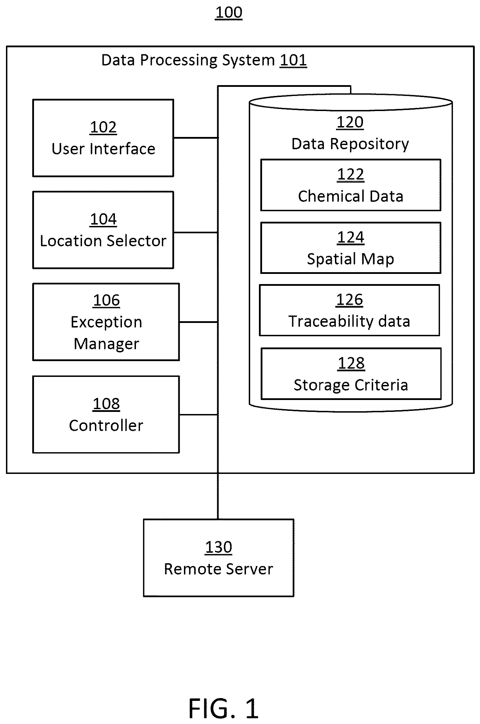

**FIG. 1** depicts an example of a system **100** for the management of chemical products, such as explosives, ordinance, or precursors therefor. The system **100** includes at least one data processing system **101** including components of the present disclosure. The data processing system **101** can include, be, or be instantiated according to operation of at least one computing device, which is sometimes referred to as a computer, without limiting effect. In some embodiments, multiple of the data processing systems **101** are communicatively coupled. For the clarity of the disclosure, further data processing systems **101** or other network nodes coupled with the depicted data processing system **101** may be referred to as servers **130.** Such servers **130** may be disposed physically or logically remote from the depicted data processing system **101,** according to various embodiments. The data processing system **101** can include or interface with a user interface **102** to exchange interface with a user. The data processing system **101** can include or interface with location selector **104** to select a location to store a chemical product. The data processing system **101** can include or interface with an exception manager **106** to manage exceptions related to storage criteria for chemical products. The data processing system **101** can include or interface with a controller **108** to execute various of the operations provided herein.

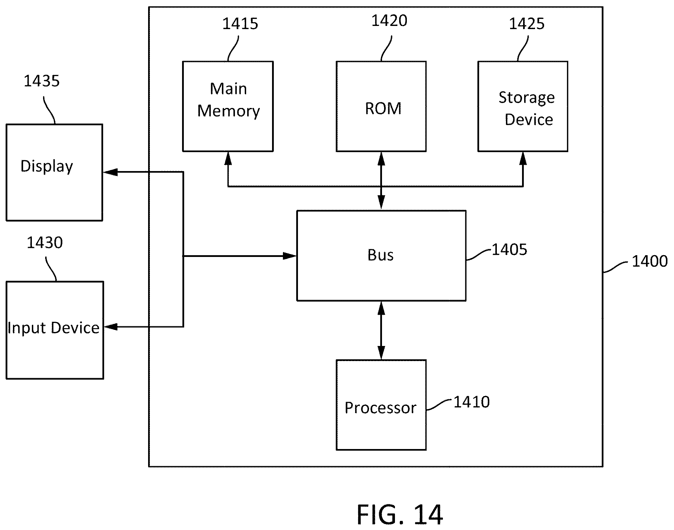

The data processing system **101** can include at least one data repository **120.** The user interface **102,** location selector **104,** or exception manager **106,** can each include at least one processing unit or other logic device such as programmable logic array engine, or module (e.g., the controller **108)** configured to communicate with the data repository **120** or database. The user interface **102,** location selector **104,** or exception manager **106** can be separate components, a single component, or part of the data processing system **101.** The data processing system **101** and its respective models, engines, and other components can include hardware elements, such as one or more processors, logic devices, or circuits of the controller, as well as software components. For example, the controller **108** of the data processing system **101** can include one or more components or structures of functionality of computing devices depicted in **FIG. 14****.**

The data repository **120** can include one or more local or distributed databases, and can include a database management system. The data repository **120** can include computer data storage or memory and can store one or more data structures, such as a data structure corresponding to chemical data **122,** a spatial map **124,** traceability data **126,** or storage criteria **128.**

Chemical data **122** may refer to or include one or more attributes of a chemical product. For example, in some embodiments, one attribute can correspond to a spatial dimension. The spatial dimension can be provided as discrete spatial measurements in two or more dimensions (e.g., length x width or length x width x height). In some embodiments, the spatial dimension is provided according to one or more predefined sizes corresponding to discrete or unitary storage. A spatial dimension can correspond to an integer multiple of one or more unitary pallets (e.g., one pallet height or two pallet heights). For example, a spatial dimension can be provided as one or more 463L master pallets, MB-X pallets, or CONEX containers. The chemical data **122** can further include information related to an explosive yield of a chemical product upon ignition (e.g., a maximum credible event (MCE)), a fragmentation range, propagation speed of ignition, or so forth. In some embodiments, the chemical data **122** includes an indication of a reactivity with further chemical products. For example, although a combination of a parachute flare with a precursor for high-explosive anti-tank (HEAT) munition may subceed a threshold, their co-location may be inadvisable due to the risk of ignition when co-located. Continuing the example, certain primers, propellants, or explosives may be inadvisable to co-locate due to ignition, fragmentation, or other risks.

In some embodiments, the chemical data **122** includes information related to a condition of a chemical product. For example, a chemical product can include partial pallets, spent launchers and casings, or so forth. A condition of a chemical product may further include an indication of a storage condition or time. For example, a condition can include a period of time in a high salinity (e.g., maritime), or non-climate-controlled environment. In some embodiments, a condition may relate to a unique or non-unique identifier (e.g., lot number or manufacturer) associated with a chemical product. For example, where a lot number or manufacturer is associated with a quality escape, the condition of the chemical product can indicate a condition of contamination or instability.

A spatial map **124** may refer to or include a data structure correlating various chemical products with one or more storage locations of a magazine. In some embodiments, a spatial map **124** includes attributes of chemical products stored in the storage locations, or other chemical products as may be received for storage in the magazine. For example, the spatial map **124** can include or interface with a first data structure comprising a (unique) identifier for chemical products at various predefined locations of the magazine. The spatial map **124** can include a second data structure (or a second portion of the first data structure) indicating various attributes of the chemical products. For example, the attributes can correspond to an identifier of the chemical products. In some embodiments, the identifier can include a non-unique identifier, such as a national stock number (NSN), such as 1315-00-935-7136, identifying a 40 mm HEDP grenade or a department of defense identification number (e.g., B546). The spatial map (e.g., a second data structure thereof) can include an explosive yield associated with a unit (e.g., a pallet) of the chemical product.

In some embodiments, the spatial map **124** may include a grid or other two-dimensional representation of a magazine. For example, the spatial map **124** can be implemented as grid squares corresponding to locations within a magazine. In some embodiments, the spatial map **124** includes indications of a third dimension, as in the case of stackable pallets (e.g., a CONEX or rack storage system). Variance instances of a magazine can include one or more buildings, trailers, ship-based magazines, or other combinations of storage locations for chemical products including ordinance, ammunition, explosives, or precursors therefor.

In some embodiments, the spatial map **124** duplicates or otherwise includes (e.g., includes linkages with) any of the chemical data **122,** traceability data **126,** or storage criteria **128** associated with a magazine. For example, the spatial map **124** can include an indication of a condition of a condition of a chemical product or any traceability information associated with the chemical product. In some embodiments, the spatial map **124** of the data processing system **101** is a subset of another data structure. For example, another data structure may be stored in a distributed data system or central server (e.g., one or more remote servers **130)** including the same data as the spatial map **124** of the data processing system **101,** or a corresponding spatial map **124** for another magazine. The data processing system **101** can be configured to exchange information related to a particular chemical product between the data processing system **101** and one or more further data processing systems **101** of the one or more remote servers **130.** For example, in some embodiments, the data processing system **101** is configured to receive or transmit information related to a particular instance of a chemical product upon a transfer of the chemical product from or to another magazine associated with an instance of the remote server **130.**

Traceability data **126** may refer to or include indications of a chain of custody of a chemical product. For example, traceability data **126** can include a record of a manufacturer, transfer to a first magazine, any inter-magazine transfers, any withdrawers (e.g., withdrawing units), returners (e.g., returning units), or magazine counterparties facilitating the withdrawals or acceptances. For example, the traceability data **126** can include a historical record of a chain of custody of an item from a manufacturer or other source to a present location. In some embodiments, a portion of the traceability data **126** of a magazine is retained for issued items, such that upon a return of any spent or unspent casings, tubes, or other indicia of confirmation of expenditure of the products (e.g., expenditure reports or attestations), the data processing system **101** can determine a disposition of the issued chemical products. In some embodiments, traceability data **126** can overlap with condition information for the chemical data. For example, an indication that a particular munition has been stored for a period of time greater than a threshold (e.g., sixty days, three years, or twenty years), stored in a non-climate-controlled environment for more than a threshold, or be issued to a unit for a time duration greater than a threshold, may be indicative of a condition. In some embodiments, the data processing system **101** can determine, based on the condition, that the munition (or another chemical product) should be discarded, allocated to training use, or otherwise indicate an intended use.

Storage criteria **128** may refer to or include parameters of an objective function to select a storage location for a chemical product. The parameters can correspond to attributes of the chemical products. One parameter can relate to an attribute of a spatial dimensionality of a chemical product. For example, the parameter can include a spatial dimension for a pallet of the chemical product, such that a selected storage location will spatially accommodate the chemical product. The parameter for the spatial dimensions, like other parameters of the objective function, can be implemented as a soft parameters or hard parameters. For example, a hard parameter can correspond to a fixed spatial dimension (e.g., rack space) whereas a soft parameter can correspond to a maximum height for compliance purposes, or to prevent encroachment of a pallet into a walkway. Further parameters of the objective function can correspond to an attribute of the chemical product related to explosive yields of the chemical products. For example, the various parameters can correspond to an attribute of an explosive yield, detonation velocity, sensitivity/stability (e.g., thermal sensitivity or shock sensitivity), blast fragmentation, heat of explosion, gas volume, deflagration rates, or chemical composition. Further parameters can relate to various classifications of types of a chemical product, various examples of which are discussed herein.

The user interface **102** can or interface with various input or output devices to exchange (e.g., obtain or provide) information with a user. For example, the user interface can include one or more scanners configured to ingest data from a barcode (e.g., quick-response, QR code) near field communication (NFC), or common access or other smart card (CAC). The ingested data can include an identify of a chemical product. For example, the identify can be provided as a unique or non-unique identifier, (e.g., serial number, lot number, manufacturer code, NSN, DODIC, etc.). The ingested data can include an identify of an individual or unit associated with a chemical product. For example, the identity can correspond to a requester requesting to store (e.g., deposit) a chemical product or withdraw a chemical product. In some embodiments, the user interface can include text entry fields to receive any of the ingested infuriation. In some embodiments, the user interface is configured to display any of the ingested data. A display includes any form of user interface **102,** such as a textual user interface or graphical user interface. The user interface **102** can generate prompts for the instances of the user interface **102,** and further be configured to receive responses to the prompts. For example, the prompts may be implemented as control elements of a GUI, the control elements configured to receive responses to the prompts. The responses can include, for example, electronic documents, waivers, or any of the data of the spatial map **124.** The user interface **102** can interface with one or more data structures of the spatial map **124** to store information of the spatial map **124** in the data structures.

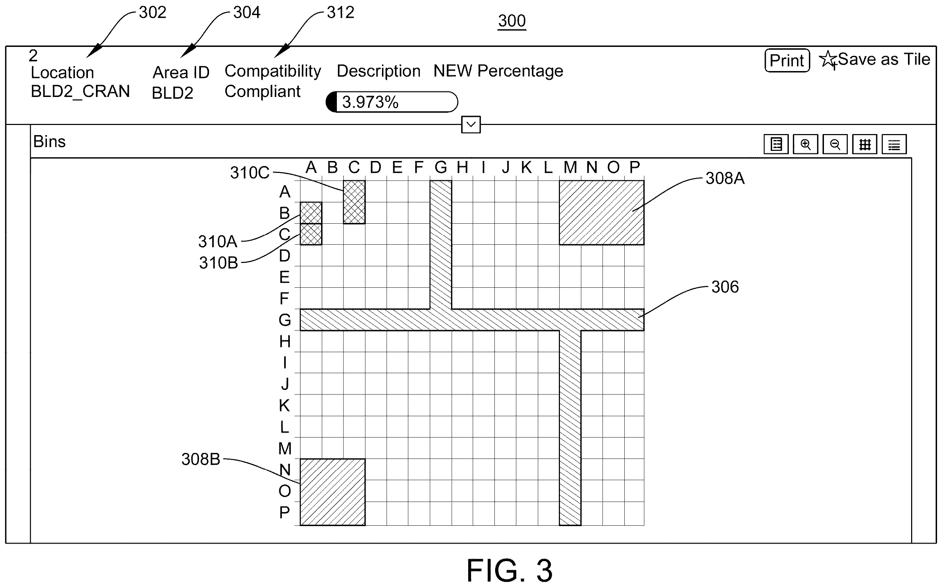

The user interface **102** can interface with one or more data structures of the spatial map **124** to obtain data for presentation therefrom. For example, the user interface can generate user instance instances (e.g., GUI instances) providing a two-dimensional representation of a magazine. For example, the two-dimensional representations can depict a length and width of at least a portion of the magazine (e.g., room, structure, or another zone). The two-dimensions can correspond, at least approximately, to X-Y dimensions of a grid. The grid can include a set of predefined storage locations, which may be referred to as slot, bins, aisles, racks, shelves, sections, areas, zones, or otherwise. In some embodiments, the spatial map **124** includes a third dimension which can be depicted via the user interface (e.g., based on a three-dimensional rendering, color-coded locations, textual descriptions overlaid upon a two-dimensional grid, or otherwise). An example of a user interface instance is depicted hereinafter at **FIG. 3****,** which may sometimes be referred to as a plan-o-graph.

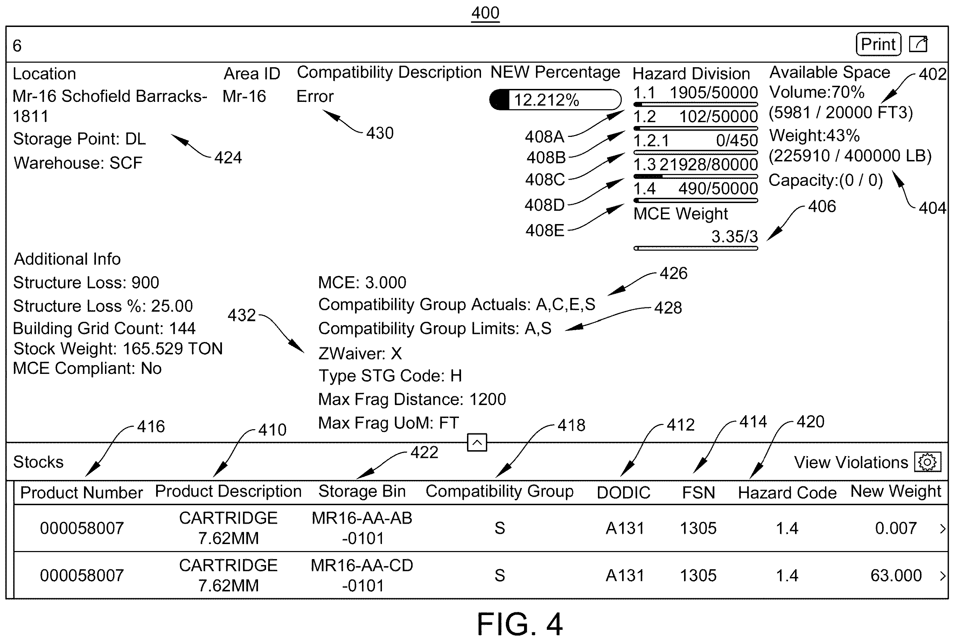

The user interface **102** can further include various presentations of prompts for user responses. In some embodiments, the user interface **102** can include role-based access control, user profiles, or contextual views. For example, the data processing system **101** can present differing instances of a user interface **102** to a representative of a requesting unit (e.g., requesting withdrawal or storage of munitions), a representative of the magazine (e.g., managing the requested withdrawal or storage of munitions). Some examples of user interface instances as may be provided for a role corresponding to magazine management are provided henceforth, such as at each of **FIGs. 4-8****.** Such examples are not intended to be limiting. For example, in some embodiments, the data processing system **101** can instantiate further instances of a user interface for presentation to a manager for a set of magazines (e.g., a total ammunition management information system (TAMIS).

The location selector **104** can execute an objective function to select a location for a chemical product. According to an execution of the objective function, the objective function can operate according to various parameters. The parameters of the objective function can correspond to identifiers or intended uses of chemical products stored in a magazine, or received for storage in the magazine. For example, the objective function can be configured to select a storage location based on logistical burden, such as to co-locate like chemical products. Like chemical products can refer to products sharing an identification number (e.g., National Item Identification Number (NIN), DODIC, lot number) or type (e.g., small arms cartridges, rockets, or precursors for explosives or ordinance). Accordingly, the parameters of the storage criteria **128** can include a type identifier, or the NSN, DODIC, lot number, or another identifier. In some embodiments, the parameters of the storage criteria **128** include in indication of intended use, as may be useful to discriminate between chemical products allocated to (or otherwise intended for use in) training exercises and operational contingencies.

The objective function can determine a performance metric according to a match of an identifier of a chemical product stored with a chemical product received for storage in the magazine. For example, the objective function can optimize for density of like chemical products (e.g., like types or other identifiers). As used herein, optimization can refer to a determination of a local minimum (or maximum), which may not necessarily constitute a global minimum (or maximum). That is, optimizations determined according to an execution of the objective function will not necessarily correspond to a best solution of a solution space. For example, a determination of a maximum density or minimum risk/hazard of a propagated explosion need not refer to a global maximum (density), minimum (risk/hazard), according to the propensity of an objective function to become trapped proximal to local minima. However, such determined values may nonetheless constitute technical improvements to the art of management of chemical products including explosives, ordinance, and precursors therefor.

In various embodiments, one or more thresholds, including any of the thresholds discussed herein, may be included into the objective function as a soft or hard constraint. In some embodiments, the location selector **104** can execute multiple executions of the objective function according to various application of constraints. For example, the location selector **104** can execute the objective function according to a hard constraint related to a compliance criterion and further execute the objective function lacking the hard constraint. The location selector can provide selected storage locations, according to each execution, to the user interface for presentation to a user. Accordingly, a user may select either of a conforming operation or a non-conforming operation according to presented options.

In some embodiments, the execution of the objective function includes execution of a machine learning model. For example, the machine learning models can include execution of classification models to classify various storage locations according to a logistical burden or other aspect (e.g., to optimize a solution to an objective function).

The exception manager **106** can manage exceptions of various constraints/parameters of the objective function. For example, upon a user selection of a non-conforming storage location, the exception manager **106** can interface with the user interface **102** to generate a control element configured to receive a waiver for a constraint related to the non-conformance. In some embodiments, the waiver may be generated by a user, according to a determination of authorization (e.g., login credentials). In some embodiments, the waiver is received as an electronic waiver according to a key file, electronic certificate, block of a blockchain protocol, or other example (e.g., pdf document). The exception manager **106** can receive, via the user interface **102,** the waiver, along with an indication of an expiration thereof. The exception manager **106** can track compliance based on the waiver and the expiration, and upon (or in advance of) non-compliance, generate a notification which may be presented via the user interface. The exception manager **106** can further retain any previously received waivers, as may be retrieved for an audit. For example, the exception manager **106** can interface with a remote server **130** to provide indications of compliance related to any exceptions generated corresponding to received waivers.

The controller **108** can include one or more processing circuits, as may be implemented according to hardware or software components, to aid in the operation of various of the components of the data processing system **101.** Some of the one or more processing circuits are further described with regard to **FIG. 14****.** The controller **108** can further include communications circuitry to interface between the various components of the data processing system **101.** In some embodiments, the communications circuitry includes a network interface configured to communicate with one or more instances of a remote server **130** in network communication with the data processing system **101.** A network coupled with the network interface can include any number of other wired or wireless networks. For example, the components can be joined by an Ethernet, Wi-Fi, cellular, PCIe, AXI, or other network interfaces. The network can include various boundaries which are not depicted for clarity of the figures. For example, boundaries between devices, subnets, firewalled networks, and the like may be present. In some embodiments, the network interface of the controller **108** is configured to detect a loss of a communicative coupling or restoration of communicative coupling between the data processing system **101** and one or more of the remote servers **130.** The controller **108** can, responsive to the detection, alternate between an offline mode of operation and an online mode of operation, with regard to all or select of the remote servers **130.**

The system **100** includes the depicted data processing system **101** to manage operations of a magazine. The system **100** may also include any number of remote servers **130** communicatively coupled with the depicted data processing system **101.** One or more of the remote servers **130** can correspond to further data processing systems **101** corresponding to further instances of magazines, in some embodiments. The further of the data processing systems **101** may be implemented similarly to the depicted instance of the data processing system **101,** or otherwise. According to various embodiments, computing devices of the various data processing systems may be networked according to a flat or hierarchical organizational structure. For example, one or more of the remote servers **130** can correspond to a computing device for a control or management node for any number of data processing systems **101.** Such a control or management node corresponds to an inter-magazine management system, such as TAMIS, in some embodiments.

While operating in an on-line mode with at least one remote server **130,** the data processing system **101** can send or receive information with the at least one remote server **130.** For example, the data processing system **101** can send or receive chemical data **122,** traceability data **126,** or storage criteria **128** to/from one or more remote servers **130.** In some embodiments, the data is sent/received on a periodic or rolling basis. In some embodiments, the data is sent/received responsive to a trigger such as an issuance or an inter-magazine transfer. In some embodiments, the data is sent to or received from another data processing system **101** of another magazine. In some embodiments, the data is sent to or received from another system of an inter-magazine system (e.g., TAMIS). Responsive to a detection of a loss of communicative coupling with the at least one remote server **130,** the data processing system **101** can transition to operating according to an off-line mode of operation. In some embodiments, the information exchanged with any of the remote servers **130** can include any of the information provided to or received from the user interface **102.**

While operating in an off-line mode with at least one remote server **130,** the data processing system **101** can locally enqueue data (or requests) for transmission. Responsive to a detection of a restoration of communicative coupling with the at least one remote server **130,** the data processing system **101** can transition to operating according to an on-line mode of operation.

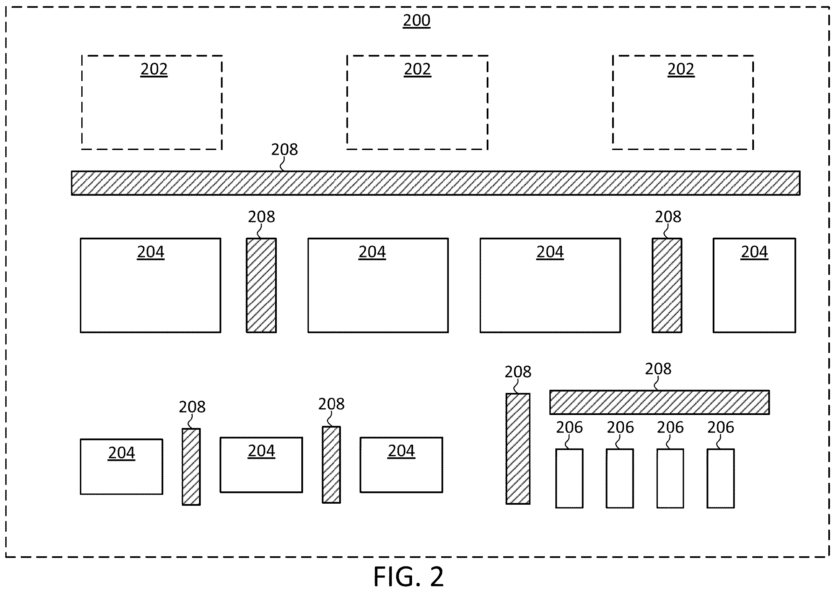

Referring now to **FIG. 2****,** a top view of an example magazine **200** is provided. The depicted example of the magazine **200** includes various outside storage areas **202,** permanent structures **204** (e.g., buildings or bunkers), non-permanent structures **206** (e.g., trailers), and other features **208** relevant to storage locations of the magazine **200** (e.g., berms or other blast control measures, loading docks, staging areas, etc.). In some embodiments, a magazine **200** can include additional or fewer storage locations. For example, in some instances, the depicted magazine **200** may be a constituent zone of a larger magazine **200.** In some instances, a structure (e.g., trailer) of the depicted magazine **200** may itself be referred to as a magazine. That is, in some embodiments, the data processing system can operate according to various hierarchical levels, such as at a level of a rack, room, building, zone, location, theatre of operation, or so forth.

The magazine **200** includes various portions, which may be implemented as a structure or outside storage area **202.** A structure can include a permanent structure **204** such as a warehouse, bunker, silo, or shed. A structure can include a transportable or other temporary structure **206** such as a tent, trailer, CONEX. A spatial map (e.g., the spatial map **124** of **FIG. 1****)** can associate various of the structures or other magazine portions with attributes thereof. Each portion of the magazine can correspond to a building, a portion of a building, or a set of buildings. In some embodiments, an attribute can include an indication of a predefined storage location (e.g., grid square, rack location, room, trailer loading position, or the like). In some embodiments, an attribute is provided on a per-storage location basis. For example, a storage location may be associated with a spatial dimension specific to the location, as in the example of rack storage. In some embodiments, an attribute is provided on a per-structure basis, such as a blast containment attribute, as may correspond to a construction of the storage location, along with berms or other features **208** associated with the structure (or other storage location).

Various portions of the magazine **200** may correspond to various types of munitions or other chemical products. For example, a portion may correspond to one or more of a type of ordinance, explosives, or their various precursors or residues (e.g., scrap materials, partial pallets, brass, packaging, attestations of use, or tubes).

Referring now to **FIG. 3****,** an example of a graphical user interface instance **300** providing a two-dimensional view of a magazine portion, as generated by the user interface **102** is provided. The GUI interface instance **300** is provided within one building of a magazine (e.g., the magazine **200** of **FIG. 2****),** to aid in reproducibility of the present figure. Such an illustrative example should not be construed as limiting. In various aspects of the present disclosure, a two- or three-dimensional view of a magazine can correspond to a larger or smaller portion. The particular location of the depicted portion of the building **302** is provided, along with a structure level identifier **304** (building 2). Various attributes may correspond to various locations of a magazine. For example, some attributes, such as a blast containment for a blast containment may be determined for a structure or portion thereof. Further, co-location of certain items may be determined according to a building basis, or more (or less) granular basis (e.g., a room of a structure or a sector of a magazine).

An access path **306** occupies select grid squares of the spatial map (e.g., the spatial map **124** of **FIG. 1****).** Further depicted are first and second restricted storage locations **308A, 308B,** which may be provided with increased prominence (e.g., in red, bolded, outlined, etc.). Further depicted are a first occupied storage location **310A** and second occupied storage location **310B** of a first dimension (e.g., one grid square or pallet) and a third occupied storage location **310C** corresponding to a third occupied storage location. A compliance indicator **312** can provide an indication of the portion of the magazine or particular storage locations thereof.

**FIG. 4** depicts an explosive status report **400** generated using spatial map data, according to some embodiments. For example, the report **400** can indicate a conformance of a magazine with any of various thresholds or another predefined criterion. Examples of thresholds can include a spatial threshold **402,** depicted as a volumetric threshold (cubic feet) but which can include other spatial thresholds **402** such as a floorspace area thresholds, or a threshold for a number of unitary pallets. Other of the thresholds can refer to a mass/weight threshold **404,** or a blast containment threshold **406.** For example, the blast containment threshold **406** can correspond to a maximum credible event (CRE) indicating detonation of contents of a magazine. References to a magazine can refer to, for example, the magazine **200** of **FIG. 2****,** a room, building, or other portion thereof, or another magazine (e.g., a magazine of a ship). Further thresholds **408** of the explosive status report **400** can refer to particular types of chemical product as indicated by a spatial map (e.g., spatial map **124 of** **FIG. 1****),** depicted herein according to the examples of a threshold **408A** for chemical products which are a mass explosion hazard, a threshold **408B** for chemical products which are a projection hazard without mass explosion, a threshold **408C** for chemical products which are a severe projection hazard, a threshold **408D** for chemical products which are a fire hazard without mass explosion hazard, or a threshold **408E** for chemical products which are a hazard as limited to packaging. For example, the depicted example provides examples of particular stocks **410** of chemical products; more specifically, the stocks include small arms cartridges which correspond to a hazard limited to its packaging.

Referring again to the particular stocks **410,** each particular stock is provided as including various non-unique identifiers including a DODIC **412,** federal stock number **414,** or other product number **416.** The particular stocks **410** may also be provided with one or more indications of a type, such as a hazard code **418** or a type **420** of a primary explosive substance to indicate compatibility with other chemical products. For example, small arms cartridges may be typified as type 'S.' Other types can include, for example, primary explosive substances 'A,' bulk propellants 'C,' or explosive substances 'E.' The spatial map can include an indication of compatibility between the substances stored at a location, or a compatibility with the location itself (e.g., the spatial map can associate a limited set of types with a magazine portion). The explosive status report **400** can further indicate a magazine location **424,** an indication **426** of associated types, and an indication **428** of actually stored types of chemical products. The explosive status report **400** can further indicate a warning, error, or other indication **430** of overall conformance of the magazine or portion thereof with the various predefined criteria. In some embodiments, the conformance may rely upon or relate to a waiver for a portion of the stored chemical products. The explosive status report **400** can include an indication **432** of any such associated waiver.

Each of the particular stocks **410** provided in the explosive status report **400** (and more generally, the stocks available to a spatial map used to generate the explosive status report **400)** can correspond to a storage location **422.** Further, the spatial map **124** may interface with data structures including information relating stocks not contained in the magazine. Accordingly, upon receipt of an identity of an item not stored in the magazine, a computer associated with the spatial map can associate attributes of the chemical product with the received chemical product.

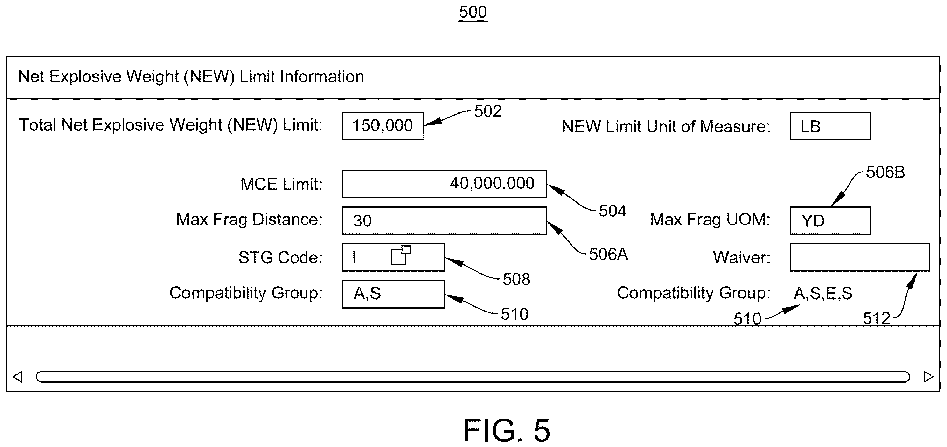

**FIG. 5** depicts an example of a user interface instance **500** to receive, present, or otherwise maintain additional magazine characteristics including a variety of fields related to explosive storage, according to some embodiments. For example, the fields may be presented or received via a user interface instance, such as via textual fields (as is depicted). The fields include a net explosive weight (NEW) field **502.** The NEW field is depicted in units of trinitrotoluene (TNT) equivalent pounds, corresponding to about 4 MJ. A separate field can indicate a maximum credible event (MCE) limit related to a magazine or portion thereof. The MCE **504** can correspond to an explosion, fragmentation, or other aspect of chemical product interaction. For example, further fields correspond to a fragmentation distance **506A** (and units therefor **506B).** Additional fields include a storage compatibility group (STG) **508** which may relate to an indication **510** of chemical product types associated with (e.g., authorized for storage within) a location, or actually stored in the location, and an indication of actually stored types (e.g., indication **426, 428 of** **FIG. 4****).** Further fields may relate to a waiver, such as a waiver for exceeding a NEW or other threshold, or for co-location of chemical products contrary to the indications of co-locatable chemical products of the storage criteria. More particularly, a waiver field **512** can be configured to receive (or present) a waiver for storage of a chemical product related to other displayed fields.

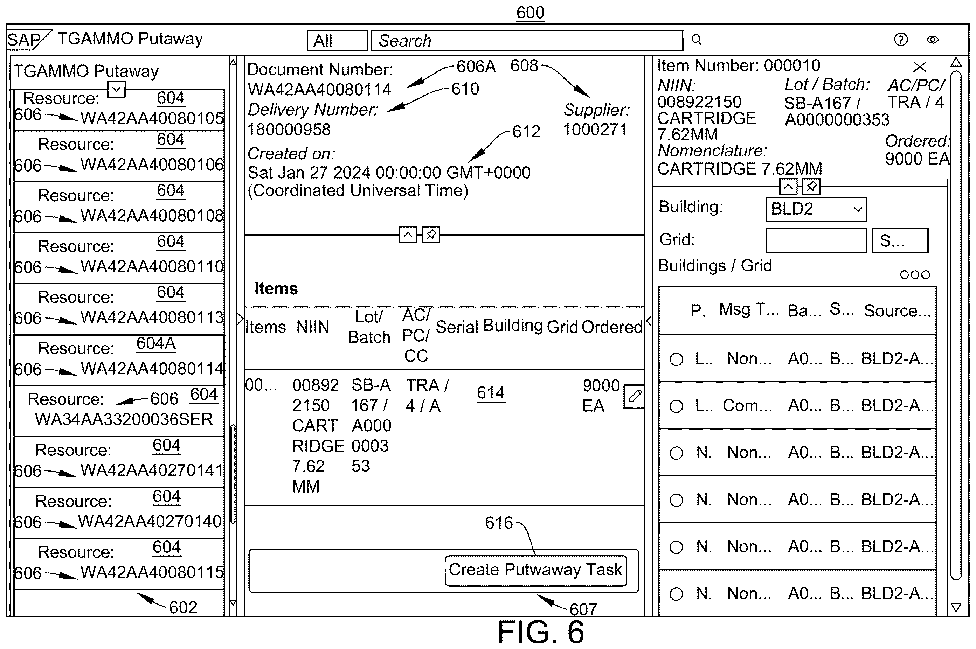

**FIG. 6** depicts an example of a user interface instance **600,** according to various embodiments. A worklist field **602** includes various requests **604** relating to chemical products. For example, each of the requests can **604** correspond to a request to store a chemical product in a magazine, or withdraw a chemical product from the magazine. Each request can include a unique identifier **606.** In some embodiments (as is depicted), a data processing system can present, via the user interface, the unique identifier **606** for the request. Requests can further include any of a resource assigned to process the request. Where a resource is not assigned, the user interface can include a selectable control element to select (e.g., assign) a resource. A resource can include, for example, a unit, an individual, or a subcomponent of a data processing system. Further, request can include any traceability data or chemical data (e.g., condition information), although such fields may not be depicted according to the embodied instance of **FIG. 6****.**

Upon selection of an item from the worklist field **602,** information associated with the selected request **604A** may be provided in further detail, in a detail view **607.** The detail view **607** can include detail information related to the selected request **604A.** For example, the illustrative example includes traceability data of a supplier **608** for a chemical product associated with the request, a delivery number **610** (e.g., a unique identifier of the delivery of the chemical product), and an indication **612** of a creation time of the selected request **602A.** Information of the detail view **607** may vary according to various embodiments, or between different types of requests (e.g., new stock for storage, re-stock of item for storage, withdraw request, etc.).
The detail view **607** can further depict attributes **614** of the chemical product. For example, the depicted attributes include a national identification item number (NIIN), lot or batch, or indicia of condition. The indicia of condition may be provided according to, for example, an Acquisition Code, Purpose Code (indicative of war reserves, basic combat unit loads, operational special stocks, and training), or Condition Code (AC/PC/CC), among others. For example, the indicia of condition can indicate that a chemical product is intended for use in training (TRA) or operational contingencies. Further depicted is a quantity of an item of the request. In some embodiments, requests can include items which may vary according to an item type, quantity, or condition. Further, in some embodiments, additional information may be populated according to a selection thereof. For example, upon selection of a storage location to withdraw an item from or store an item in, one or more data fields related to the storage location may be populated and presented via the user interface instance **600.** Selection of one or more items may cause a computer (e.g., a controller **108** of the data processing system **101)** to instantiate, activate, set to modal, or otherwise display an item disposition screen, such as may include a selectable control element **616** to generate an instruction (e.g., ticket) in a queue to cause the chemical product to be moved to the selected storage location.

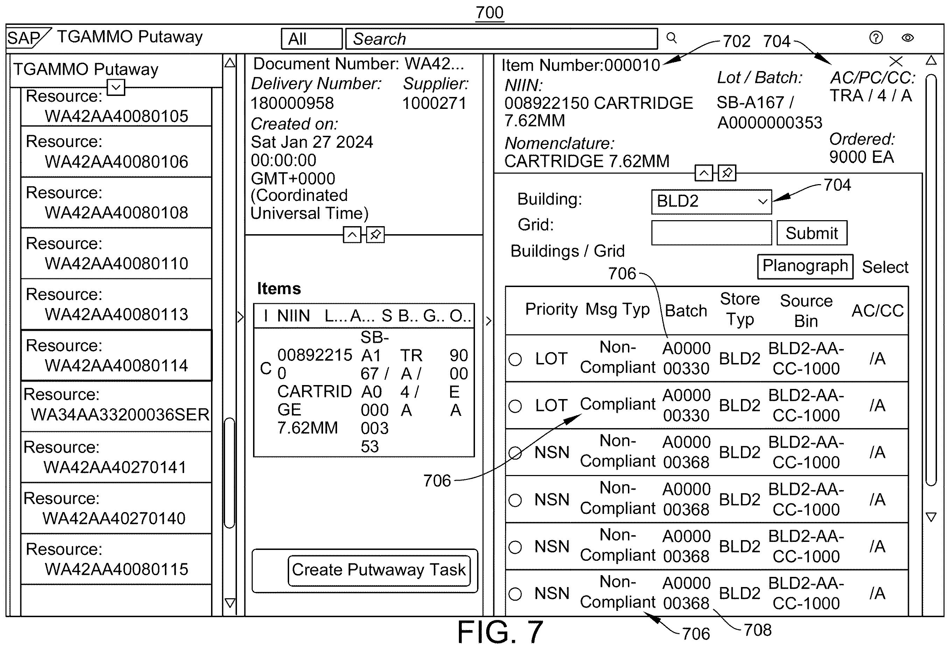

**FIG. 7** depicts another example of a user interface instance **700,** according to various embodiments. Particularly, the depicted instance **700** can present one or more storage locations to store the selected chemical products responsive to a receipt of a storage request (as is depicted), or one or more storage locations to withdraw an item from a storage location responsive to a withdrawal request. An item identifier **702** and various attributes of the chemical product **704** may be provided via the instance **700** of the user interface (e.g., the user interface **102 of** **FIG. 1****),** in some embodiments. For example, the depicted attributes of the chemical product **704** can include at least a subset of attributes used, by the data processing system, to match chemical products within or between various magazines or portions thereof (e.g., buildings). Further, in some embodiments, filters **706** may be provided to filter potential locations of a magazine. For example, the filters **706** can include radio buttons, drop downs, textual fields, or so forth. The filters **706** can be actuated to select a building, grid location, zone, room, or other portion of a magazine.

The user interface instance **700** can include one or more potential storage locations. For example, an objective function (as may be executed by the location selector **104)** can select one or more locations for presentation in the user interface instance **700.** The selected locations may be provided based on determining a match between an identifier of a chemical product received for storage and chemical products already stored in (or assigned to) storage locations within the magazine. For example, the data processing system can optimize for density of like chemical products based on the determination of such as match. The objective function can be configured to select a match a lot number, an NSN number, or another non-unique identifier. In some embodiments, the instance **700** can include a selection of a match basis, such as selection of prioritizing matches based on a lot number NSN, NIIN, etc.

The selected storage locations can include compliant locations and non-compliant (e.g., restricted) storage locations, which may further be identified according to a bin, bay, or grid number. In some embodiments, the instance **700** can include a selectable control element to display a two-dimensional view of a magazine portion, as may be referred to as a plan-o-graph (e.g., the two-dimensional view of a magazine portion of **FIG. 3****).**

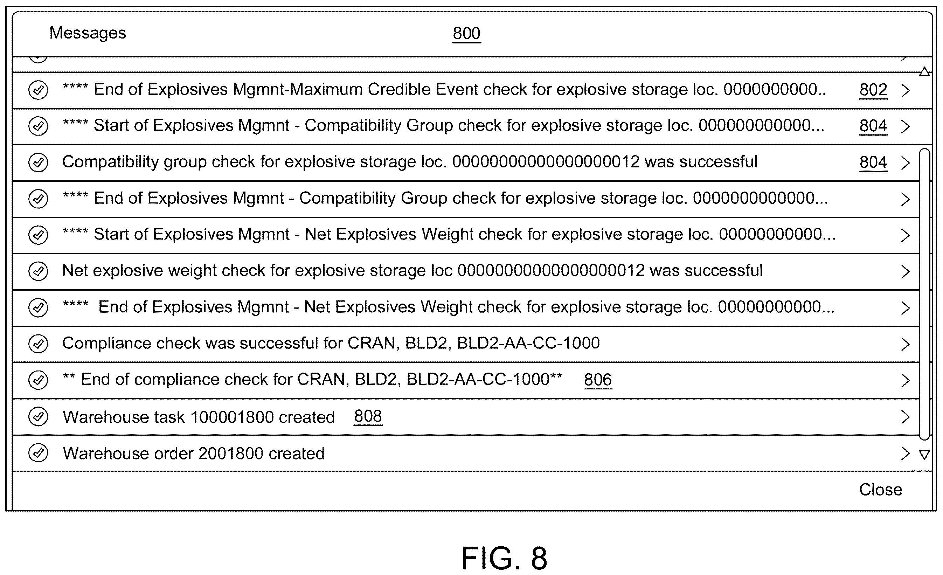

**FIG. 8** depicts an example user interface **800** of messages related to compliance checking, according to various embodiments. In some embodiments, a record of each message may be stored (e.g., in the data repository **120,** as traceability data **126).** The messages can correspond to compliance checks executed according to an execution of an objective function (e.g., thresholds, densities, or other criteria). For example, a first message **802** can correspond to a comparison between an explosive yield for a combination of a chemical product received for storage and chemical products already stored in the magazine with an MCE for a portion of the magazine. A second message **804** can correspond to a result of a compatibility group check for any of various of types of chemical products. A third message **806** can correspond to a result of an aggregate compliance check including any number of thresholds, optimizations, or other criteria, some of which are described in further detail herein. A fourth message **808** can correspond to a task generated, which may be generated according to a user interaction with one or more user interface instances. In some embodiments, the task is generated upon a selection of a task creation control element. In some embodiments, the task is generated responsive to the result of the compliance check, or receipt of a waiver related to a compliance check.

The depicted messages provide indications of activity in compliance with a predetermined ruleset. In this example of **FIG. 8****,** the message flow displayed in the graphical user interface **800** represents "positive" outcomes in which the validating criteria of the user activity did not result in a rules violation. In some instances, a data processing system can generate further generate and display messages for device updates or for display via the graphical user interface **800** to indicate non-compliance, such as warnings or alerts. For example, the depicted messages can indicate a rule violation, such as a rule violation including a rule criterion and detected value.

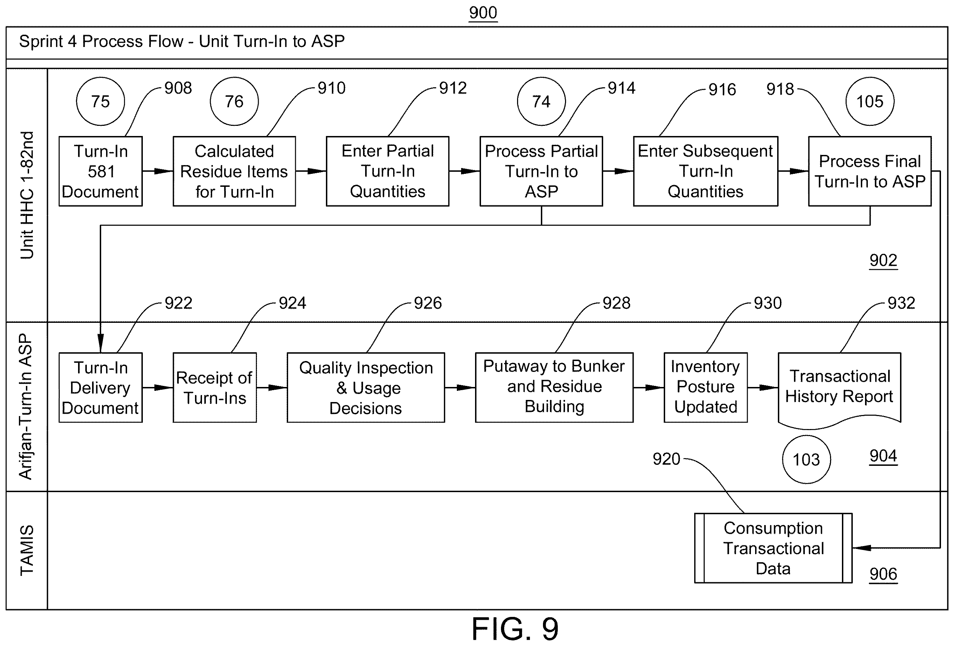

**FIG. 9** depicts an example flow chart for a method of chemical product storage, according to various embodiments. Particularly, the flow is provided according to a swim lane diagram **900** including a first lane **902** for operations corresponding to a withdrawing or returning unit and a second lane **904** for operations corresponding to magazine management (e.g., at an ammunition supply point). A third lane **906** can correspond to a remote server, such as a remote server coupled with multiple magazines (e.g., any of the remote servers of **FIG. 1****).**

A first operation **908** of the first lane **902** includes a provision of data corresponding to one or more fields of a request for issue or turn in of immunization (e.g., DA form 502). For example, the form (or a corresponding field of a user interface instance) can include an indication of a requestor or requestee, a request date/time, a priority, an indication of a requesting unit such as a DODAAC, and an indication of one or more items, which can include, for example, a DODIC/DOCIC, NSN, NIIN, lot number, serial number, etc.

A second operation **910** of the first lane **902** includes a calculation of reside (e.g., expended ammunition, unspent casings, or tubes). For example, a data processing system can generate the calculation based on a unit-facing application or user interface instance. In some embodiments, the provided data can include indications of condition, such as may be provided according to a textual description or a selection of one or more predefined condition codes. Further, at operation **912** of the first lane **902,** partial turn in quantities are entered. At operation **914** partial turn in is processed to provide the data to a magazine, as is further referred to at operation **922.** At operation **916** of the first lane **902,** other turn in quantities are provided, as may be provided to a magazine for further processing at operation **918.** Further, at least a portion of the data provided for processing at operation **922** may be provided to the remote server which may process the data to maintain an inter-magazine spatial map, or communicate traceability data between various computers of one or more magazines at operation **920.** Where a connection to the remote server is absent, a data processing system may locally store data, and monitor a communicative connection with the remote server. Upon a restoration of the communicative connection, the data processing system can provide the data to the remote server **130.**

Referring now to the second swim lane **904,** further operations are provided. At operation **922,** various of the turn in information is received by a data processing system for the magazine. Such information may be received according to an electronic data transfer, or responses to prompts generated for instances of a display of the user interface (e.g., information received from a user facing instance may be presented to a magazine management instance, as entered or as automatically transformed/processed). At operation **924,** the data processing system receives an acknowledgement of turn in. At operation **926,** the data processing system receives an indication of a condition of the turned in items, as may be generated according to inputs received by the data processing system (e.g., responsive to prompts generated by the data processing system, via either of unit facing instances or magazine management facing instances of a user interface). At operation **928,** one or more storage locations are selected, as may be determined according to an execution of an objective function of the data processing system. For example, as depicted, storage locations may be selected in separate locations for a bunker and residue buildings. At operations **930,** a spatial map **124** is updated responsive to the selection of the storage locations (e.g., responsive to a generation or execution of a job to store the items). In some embodiments, the data processing system can generate a report **932** (e.g., the explosive status report **400** of **FIG. 4****).**

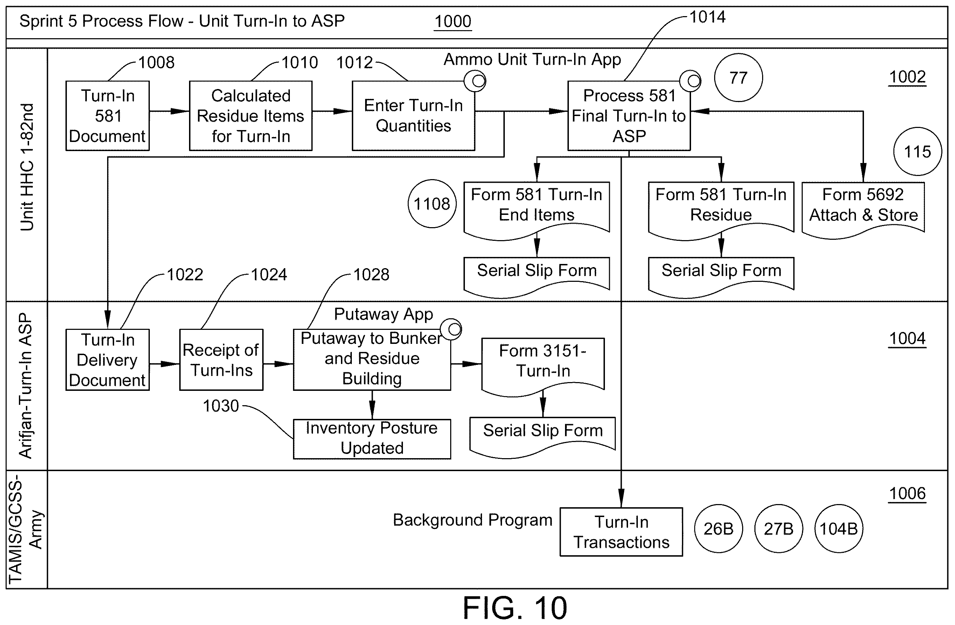

**FIG. 10** depicts another example flow chart for a method of chemical product storage, according to various embodiments. Particularly, the flow is provided according to a swim lane diagram **1000.** A first swim lane **1002,** can, like the first swim lane **902** of **FIG. 9****,** correspond to operations corresponding to a withdrawing or returning unit. In some embodiments, the operations of the first swim lane **1002** can correspond to operations performed by or in conjunction with a unit-facing application or user interface instances of the data processing system. A second swim lane **1004,** can, like the second swim lane **904** of **FIG. 9****,** correspond to magazine management. In some embodiments, the operations of the second swim lane **1004** can correspond to operations performed by or in conjunction with a magazine-facing application or user interface instances of the data processing system. A third swim lane **1006,** can, like the third swim lane **906** of **FIG. 9****,** correspond to a remote server, or an application thereof.

Operations **1008** and **1010** can parallel operations **908** and **910** and are not further described for the benefit of brevity of the disclosure. Operation **1012** can correspond to a combination of operations **912** and **916,** which can be provided simultaneously. Operation **1014** can correspond to operations **914** and **918,** which may be performed according to a common process, according to various sub-operations thereof. Operations **1022** and **1024** can parallel operations **922** and **924** and are not further described for the benefit of brevity of the disclosure. Operation **1028** can include content of operations **926** and **928,** as may be performed according to the present disclosure, wherein operations **1030** (corresponding to operation **926)** may be further executed responsive to the execution of operation **926.**

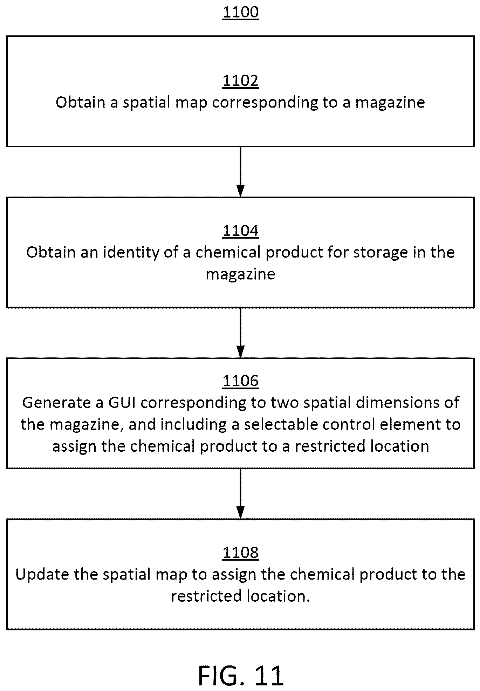

**FIG. 11** depicts an example flow chart for a method **1100** of chemical product storage, according to various embodiments. The method **1100** can be performed by one or more systems or components depicted in **FIG. 1****,** or otherwise provided herein (e.g., the data processing system **101** of **FIG. 1****).** The method can include additional, fewer, or different operations according to various embodiments.

At operation **1102,** a data processing system obtains a spatial map including multiple first storage locations corresponding to first chemical products of a magazine. The spatial map includes, for the first chemical products, a first attribute of a spatial dimension and a second attribute of an explosive yield. In some embodiments, the spatial map includes further attributes, some of which are explicitly described herein. The magazine can include various structures, with the spatial map mapping a containment level for the various structures. For example, the structures can include at least one temporary structure and at least one permanent structure.

At operation **1104,** the data processing system obtains an identity of a second chemical product received for storage in the magazine and a first attribute and second attribute for the second chemical product. The second chemical product, like the first chemical product, can include any of various ordinance, explosives, or a precursor for the ordinance or the explosives. The identity or attributes of the second chemical product may be received according to responses to prompts generated, by the data processing system, via a user interface, or according to retrieval from another data structure.

At operation **1106,** the data processing system generates, using the spatial map, a graphical user interface (GUI) corresponding to at least two spatial dimensions of the magazine. The GUI includes an indication of the first storage locations for the first chemical products and a second storage location. The at least one second storage location can be selected based on a comparison between an explosive yield threshold of a containment level (e.g., blast design limit) for a portion of the magazine (e.g., a structure, or a combination of a structure and a feature proximal thereto). The compared explosive yield can include a sum of the explosive yield of the second chemical product with the explosive yield of other chemical products stored in the selection portion of the magazine.

To select the second storage location, the data processing system can conduct a compatibility check between a type of one or more of the first chemical products with a type of the second chemical product. In some embodiments, the data processing system can execute an objective function to maximize a density of like chemical products in the magazine. The like chemical products can include, for example, chemical products corresponding to a same type or other non-unique identifier.

The GUI includes an indication of at least one second storage location as restricted according to predefined storage location selection criteria using the first and second attributes. The GUI includes a selectable control element which, upon selection, maps the second chemical product to the restricted location.

At operation **1108,** the data processing system updates the spatial map responsive to a selection of the control element, to assign the second chemical product to the restricted location. The selectable control element can include a sub-element configured to receive a waiver. For example, the control element can be configured to receive a waiver for one or more storage criteria causing the storage location to be indicated as restricted. In some embodiments, the selectable control element includes a sub-element to receive an indication of an expiration of a predefined duration, is configured to automatically parse the waiver to determine the expiration date, or otherwise correspond to the predefined duration of the waiver.

In some embodiments, the data processing system detects a loss of connectivity between a computer implementing the computer-implemented method and a remote server, locally updates, the spatial map to correspond to removals of the second chemical products or additions of third chemical products, and communicates the updated spatial map to the remote server responsive to a detected restoration of the connectivity.

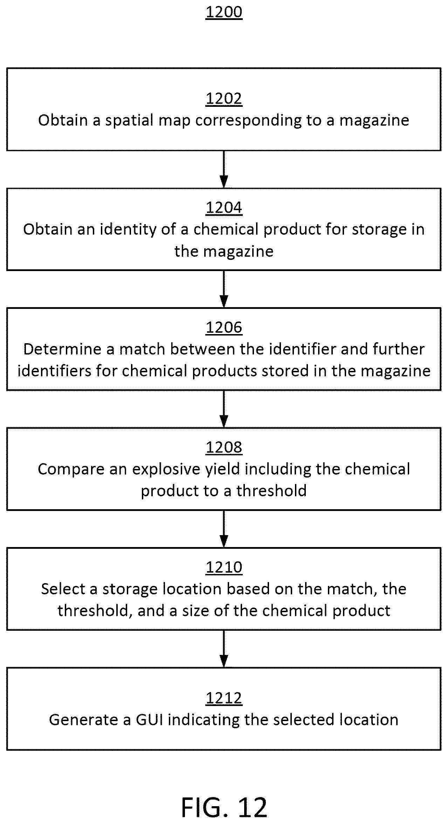

**FIG. 12** depicts another example flow chart for a method **1200** of chemical product storage, according to various embodiments. The method **1200** can be performed by one or more systems or components depicted in **FIG. 1****,** or otherwise provided herein (e.g., the data processing system **101 of** **FIG. 1****).** The method can include additional, fewer, or different operations according to various embodiments.

At operation **1202,** the data processing system obtains a spatial map including first storage locations corresponding to first chemical products of a magazine. The spatial map includes, for each of the first chemical products, a first attribute of a spatial dimension and a second attribute of an explosive yield.

At operation **1204,** the data processing system obtains an identity of a second chemical product received for storage in the magazine and a first attribute and second attribute for the second chemical product. As described with regard to the method **1100** of **FIG. 11****,** the chemical products referred to with regard to the present method **1200** (and throughout the present disclosure) can include ordinance, an explosive, or a precursor for the ordinance or the explosive. As is further described with regard to the method **1100** of **FIG. 11****,** the receipt of the identity can be via an instance of a user interface. Indeed, various operations or descriptions thereof may inform other operations of further systems or methods of the present disclosure. For example, chemical products can include any of various residues of ordinance (e.g., ammunition) or explosives.

At operation **1206,** the data processing system determines a match between an identifier for the second chemical product and one or more of the first chemical products. For example, the match can correspond to a type of item, or a particular stock. The match may be used, by an objective function, to densify storage of like chemical products proximal to one another as may ease logistical burdens to store or withdraw multiple examples of a same item (e.g., boxes of small arms ammunition).

At operation **1208,** the data processing system compares a sum of the explosive yield of the first chemical products and an explosive yield for the second chemical product to a threshold. For example, the threshold can correspond to a maximum credible event a magazine portion is configured to contain.

At operation **1210,** the data processing system selects a storage location based on the match, the comparison to the threshold, and the spatial dimensions of the first chemical products and the second chemical product. The selection may further depend upon a compatibility check between a type of one or more of the first chemical products with a type of the second chemical product, in some embodiments.

As described with regard to the method **1100** of **FIG. 11****,** the magazine of the present method **1200** (and other magazines referred to throughout the present disclosure) can include multiple structures corresponding to separate containment levels, as may correspond to the construction of the structures or other features of the magazine. The magazine can include various storage locations such as outdoor storage areas, permanent structures, or temporary structures (e.g., trailers).

At operation **1212,** the data processing system generates a graphical user interface (GUI) corresponding to at least two spatial dimensions of the magazine. The GUI includes the selected location and the first storage locations. The GUI can depict an indication of compliance with any of various aspects of a predefined set of selection criteria (e.g., the selection criteria **128** of **FIG. 1****).** The indication can be provided with regard to a magazine or portion thereof including multiple storage locations, or on a per-storage location basis. For example, the GUI can depict one or more conforming storage locations, or one or more non-conforming locations. The GUI can include a selectable control element which, upon selection, selects a non-conforming location (e.g., a storage location contrary to the predefined storage location selection criteria). The selectable control element can include a sub-element to receive a waiver for the criteria. For example, upon selection of a restricted storage location, the user interface can generate a prompt for the waiver to authorize the storage in the restricted location.

Operations of the method can be repeated to store further chemical products, or, in some aspects, to select chemical products for withdrawal from the magazine. For example, the data processing system can obtain an identity of a third chemical product for retrieval from the magazine along with a first attribute and second attribute for the third chemical product. In some embodiments, the identity and attributes are received via a request of an instance of a user interface provided for a requesting or withdrawing unit. The data processing system can determine another match between the identifier for the third chemical product and chemical products stored in the magazine. The data processing system can select a further storage location based on the other match, and the spatial dimensions of the first chemical products and the third chemical product. Upon selection of the further storage location, the data processing system can update the spatial map to omit the third chemical product from the second storage location. The data processing system can generate, based on the updated spatial map, a second instance of the graphical user interface (GUI) corresponding to at least two spatial dimensions of the magazine.

Referring, again to the updated spatial map, the updated spatial map can correlate each of an identity of a receiver of the third chemical product, an identity of a manufacturer of the third chemical product, a received condition of the third chemical product, a lot number for the third chemical product, or other aspects of the third chemical product (e.g., any of the chemical data **122** of **FIG. 1****).** The selection of the third chemical product can depend on any such information.

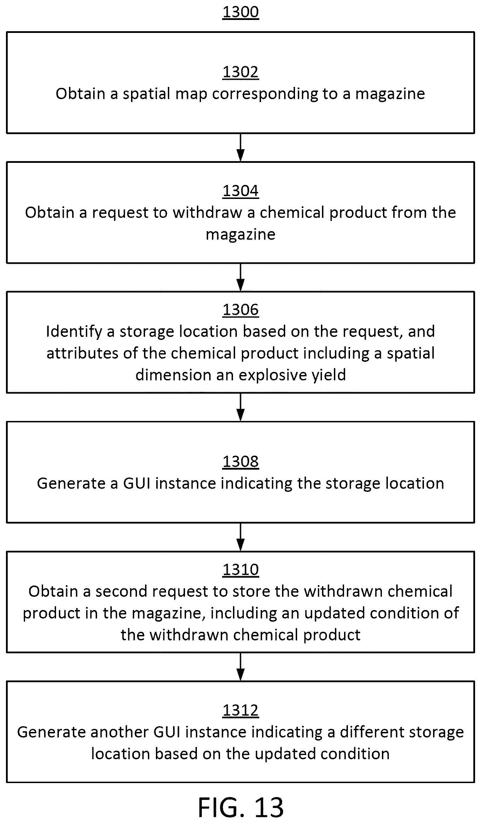

**FIG. 13** depicts yet another example flow chart for a method **1300** of chemical product storage, according to various embodiments. The method **1300** can be performed by one or more systems or components depicted in **FIG. 1****,** or otherwise provided herein (e.g., the data processing system **101 of** **FIG. 1****).** The method **1300** can include additional, fewer, or different operations according to various embodiments.

At operation **1302,** the data processing system obtains a spatial map including, for each chemical products of a magazine, a first attribute of a spatial dimension, a second attribute of an explosive yield, and a third attribute of a storage location. The spatial map can correlate, with each of the chemical products, (e.g., ordinance) an expended quantity, an unexpended quantity, or a unit designator for a receiver thereof (or other traceability corresponding thereto).

As indicated above, the magazine can include various structures, each corresponding to a containment level stored in the spatial map. For example, the magazine can include permanent or temporary structures (e.g., a trailer).

At operation **1304,** the data processing system obtains a first request to withdraw a first of the chemical products from the magazine. The first request includes an intended use for the first of the chemical products and a first requester. For example, the intended use can include one of training exercises or kinetic operations. Further, any or all of the chemical products stored in the magazine may be mapped, via the spatial map, to a designated use of, for example, the training exercises or the kinetic operations. The user interface can include a control element configured to receive an instruction to reallocate ordinance between the training exercise and the kinetic operation. In some embodiments, the reallocate can correspond to any of an inventory level, operational need, or condition of the chemical products. In some embodiments, the data processing system can predict residues (unexpended quantities, or expended quantities, such as brass, links, or tubes) of materials based on, for example, an intended use or receiving unit.

At operation **1306,** the data processing system identifies a first of the storage locations for the first of the chemical products. The data processing system can identify the first of the storage locations based on the first request, the first attribute, the second attribute, a withdrawer, the first requester, a condition upon withdrawal, and a unique identifier for the chemical product.

At operation **1308,** the data processing system generates, using the spatial map, a first instance of a graphical user interface (GUI) corresponding to at least two spatial dimensions of the magazine. The GUI can indicate, with elevated prominence, the first of the storage locations. The data processing system can present the GUI to a user, as may prompt the user to confirm or select the first of the storage locations (or, in some instances, another storage location). Responsive to a receipt of the confirmation or selection, the data processing system can generate, schedule, enqueue, or otherwise initiate a job to withdraw the chemical product from the selected location.

At operation **1310,** the data processing system obtains a second request to store the first of the chemical products in the magazine. The first request can include an updated condition of the first of the chemical products and a second requester. For example, the data processing system can receive the second request via a unit-facing GUI instance, and present at least some portions of the request to a magazine facing GUI instance. In some embodiments, the data processing system can adjust the prediction of the residues based on the second request.

At operation **1312,** the data processing system generates, using the spatial map, a second instance of the GUI indicating, with elevated prominence, a second of the storage locations selected based on the updated condition of the first of the chemical products. The data processing system can select the second of the storage locations based on a comparison of a sum of the explosive yield of the first chemical products and an explosive yield for the second chemical product to a threshold (e.g., a design limit of the magazine portion). The data processing system can further select the second of the storage locations based on the spatial dimensions of the first chemical products and the second chemical product, and the match. The data processing system can, based on user inputs received from the second instance of the GUI, generate, schedule, enqueue, or otherwise initiate a job to store the reside for the chemical product at a selected location. In some embodiments, the data processing system can select a location based on the residue materials, such as a separate location for residue storage.

**FIG. 14** is a block diagram illustrating an architecture for a computer system **1400** that can be employed to implement elements of the systems and methods described and illustrated herein. The computer system or computing device **1400** can include or be used to implement the controller **108** or its components, and components of the systems provided herein. The computing system **1400** includes at least one bus **1405** or other communication component for communicating information and at least one processor **1410** or processing circuit coupled with the bus **1405** for processing information. The computing system **1400** can also include one or more processors **1410** or processing circuits coupled with the bus for processing information. The computing system **1400** also includes at least one main memory **1415,** such as a random-access memory (RAM) or other dynamic storage device, coupled with the bus **1405** for storing information, and instructions to be executed by the processor **1410.** The main memory **1415** can be used for storing information during execution of instructions by the processor **1410.** The computing system **1400** can further include at least one read only memory (ROM) **1420** or other static storage device coupled with the bus **1405** for storing static information and instructions for the processor **1410.** A storage device **1425,** such as a solid-state device, magnetic disk or optical disk, can be coupled with the bus **1405** to persistently store information and instructions (e.g., for the data repository **120).**

The computing system **1400** can be coupled via the bus **1405** to a display **1435,** such as a liquid crystal display, or active-matrix display. An input device **1430,** such as a keyboard or mouse can be coupled with the bus **1405** for communicating information and commands to the processor **1410.** The input device **1430** can include a touch screen display **1435.**

The processes, systems and methods described herein can be implemented by the computing system **1400** in response to the processor **1410** executing an arrangement of instructions contained in main memory **1415.** Such instructions can be read into main memory **1415** from another computer-readable medium, such as the storage device **1425.** Execution of the arrangement of instructions contained in main memory **1415** causes the computing system **1400** to perform the illustrative processes described herein. One or more processors in a multiprocessing arrangement can also be employed to execute the instructions contained in main memory **1415.** Hard-wired circuitry can be used in place of or in combination with software instructions together with the systems and methods described herein. Systems and methods described herein are not limited to any specific combination of hardware circuitry and software.

Although an example computing system has been described in **FIG. 14****,** the subject matter including the operations described in this specification can be implemented in other types of digital electronic circuitry, or in computer software, firmware, or hardware, including the structures disclosed in this specification and their structural equivalents, or in combinations of one or more of them.

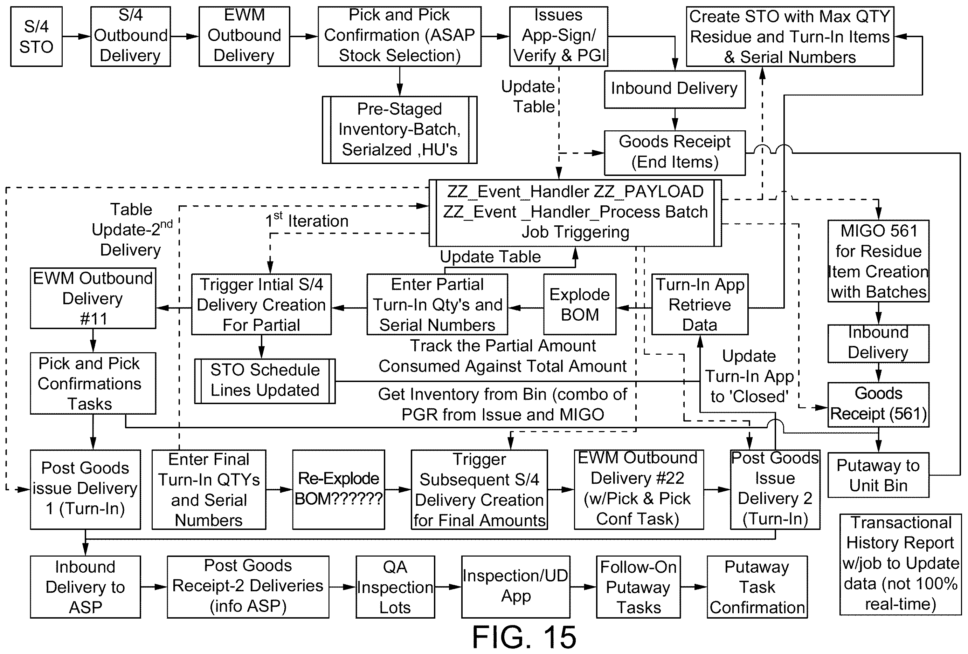

**FIG. 15** depicts an example flow diagram for operations of a data processing system, according to various embodiments. For example, the flow diagram can depict a combination of operations, at least a portion of which can duplicate operations of the methods **1100, 1200, 1300** of **FIGs. 11-13****.**

**In** embodiments, a computer-implemented method comprising: obtaining, by a computer, a spatial map comprising a plurality of first storage locations corresponding to first chemical products of a magazine the spatial map comprising, for the first chemical products: a first attribute of a spatial dimension; and a second attribute of an explosive yield; obtaining, by the computer, an identity of a second chemical product received for storage in the magazine and a first attribute and a second attribute for the second chemical product; generating, by the computer using the spatial map, a graphical user interface corresponding to at least two spatial dimensions of the magazine, the graphical user interface comprising: a first indication of the plurality of first storage locations for the first chemical products and one or more second storage locations; a second indication of at least one of the second storage locations as restricted according to predefined storage location selection criteria using the first and second attributes; and updating the spatial map by the computer responsive to a selection obtained via the graphical user interface the selection including an instruction assigning the second chemical product to a restricted location.

In some implementations, the graphical user interface includes a selectable control element for indicating the mapping of the second chemical product to the restricted location. In some implementations, the selectable control element corresponds to a predefined duration of a waiver. In some implementations, the first chemical products and the second chemical product each comprises at least one of an ordinance, an explosive, or a precursor.

In some implementations, the further comprises: selecting, by the computer, the one or more second storage locations based on a comparison between: a threshold of a containment level for a portion of the magazine; and a sum of the explosive yield of the second chemical product with the explosive yield of a plurality of the first chemical products disposed in the portion of the magazine according to the spatial map.

In some implementations, the spatial map includes corresponding containment levels a plurality of structures. In some implementations, the plurality of structures comprises a temporary structure and a permanent structure.

In some implementations, selecting the storage location comprises a compatibility check between a type of one or more of the first chemical products with a type of the second chemical product. In some implementations, the method further comprising: executing, by the computer, an objective function to maximize a density of like chemical products in the magazine. In some implementations, each of the like chemical products is associated with one or more shared identifiers in a database.

In some implementations, the method further comprising: detecting, by the computer, a loss of connectivity between a computing device implementing the computer-implemented method and a remote server; updating, by the computer, locally, the spatial map to correspond to removals of the second chemical products or additions of third chemical products; and communicating, by the computer, responsive to a detected restoration of the connectivity, the updated spatial map to the remote server.

In embodiments, a system comprising a computing device having at least one processor coupled with memory, and configured to: obtain a spatial map comprising a plurality of first storage locations corresponding to first chemical products of a magazine the spatial map comprising, for the first chemical products: a first attribute of a spatial dimension; and a second attribute of an explosive yield; obtain an identity of a second chemical product received for storage in the magazine and a first attribute and a second attribute for the second chemical product; generate, using the spatial map, a graphical user interface corresponding to at least two spatial dimensions of the magazine, the graphical user interface comprising: a first indication of the plurality of first storage locations for the first chemical products and one or more second storage locations; a second indication of at least one of the second storage locations as restricted according to predefined storage location selection criteria using the first and second attributes; and update the spatial map by the computer responsive to a selection obtained via the graphical user interface, the selecting including an instruction assigning the second chemical product to a restricted location.

In some implementations, the graphical user interface includes a selectable control element for indicating the instruction for assigning the second chemical product to the restricted location. In some implementations, the first chemical products and the second chemical product each comprises at least one of an ordinance, an explosive, or a precursor.

In some implementations, the method further comprising: selecting, by the computer, the one or more second storage locations based on a comparison between: a threshold of a containment level for a portion of the magazine; and a sum of the explosive yield of the second chemical product with the explosive yield of a plurality of the first chemical products disposed in the portion of the magazine according to the spatial map.

In some implementations, the spatial map includes corresponding containment levels a plurality of structures. In some implementations, the plurality of structures comprises a temporary structure and a permanent structure. In some implementations, selecting the storage location comprises a compatibility check between a type of one or more of the first chemical products with a type of the second chemical product.

In some implementations, the method further comprising: executing, by the computer, an objective function to maximize a density of like chemical products in the magazine, wherein each of the like chemical products is associated with one or more shared identifiers in a database.

In some implementations, the method further comprising: detecting, by the computer, a loss of connectivity between the computing device and a remote server; updating, by the computer, locally, the spatial map to correspond to removals of the second chemical products or additions of third chemical products; and communicating, by the computer, responsive to a detected restoration of the connectivity, the updated spatial map to the remote server.

In embodiments, computer-implemented method comprising: obtaining, by a computer, a spatial map comprising a plurality of first storage locations corresponding to first chemical products of a magazine, the spatial map comprising, for the first chemical products: a first attribute of a spatial dimension; and a second attribute of an explosive yield; obtaining, by the computer, an identity of a second chemical product received for storage in the magazine and a first attribute and second attribute for the second chemical product; determining, by the computer, a match between an identifier for the second chemical product and one or more of the first chemical products; comparing, by the computer, a sum of the explosive yield of the first chemical products and an explosive yield for the second chemical product to threshold; selecting, by the computer, a storage location based on the match, the comparison to the threshold, and the spatial dimensions of the first chemical products and the second chemical product; generating, by the computer, a graphical user interface corresponding to at least two spatial dimensions of the magazine, the graphical user interface comprising the selected location and the plurality of first storage locations.

In some implementations, the chemical product comprises ordinance, an explosive, or a precursor for the ordinance or the explosive. In some implementations, the graphical user interface displays an indication of compliance of the selected location with a predefined set of selection criteria.

In some implementations, the graphical user interface comprises a selectable control element which, upon selection, selects a storage location contrary to the predefined storage location selection criteria, the selectable control element comprising a sub element to receive a waiver for the criteria. In some implementations, the magazine comprises a plurality of structures; and the spatial map comprises corresponding containment levels for each of the plurality of structures. In some implementations, the plurality of structures comprises a temporary structure of a trailer and a permanent structure.

In some implementations, the method further comprising: obtaining, by the computer, an identity of a third chemical product for retrieval from the magazine, a first attribute, and second attribute for the third chemical product; determining, by the computer, a second match between an identifier for the third chemical product and one or more of the first chemical products; selecting, by the computer, a second storage location based on the match, and the spatial dimensions of the first chemical products and the third chemical product; updating by the computer, responsive to the selection of the second storage location, the spatial map to omit the third chemical product from the second storage location; and generating, by the computer, based on the updated spatial map, a second instance of the graphical user interface corresponding to at least two spatial dimensions of the magazine, the graphical user interface indicating the second storage location as unoccupied.

In some implementations, the spatial map correlates the third chemical product to: a receiver identifier of a receiver of the third chemical product; a manufacturer identifier of a manufacturer of the third chemical product; and a received condition of the third chemical product; wherein the selection of the third chemical product is based on the receiver, the manufacturer, and the received condition.

In some implementations, selecting the storage location comprises a compatibility check between a type of one or more of the first chemical products with a type of the second chemical product.

In embodiments, a system comprising a computing device having one or more processors coupled with memory, and configured to: obtain a spatial map comprising a plurality of first storage locations corresponding to first chemical products of a magazine, the spatial map comprising, for the first chemical products: a first attribute of a spatial dimension; and a second attribute of an explosive yield; obtain an identity of a second chemical product received for storage in the magazine and a first attribute and second attribute for the second chemical product; determine a match between an identifier for the second chemical product and one or more of the first chemical products; compare a sum of the explosive yield of the first chemical products and an explosive yield for the second chemical product to threshold; select a storage location based on the match, the comparison to the threshold, and the spatial dimensions of the first chemical products and the second chemical product; generate a graphical user interface corresponding to at least two spatial dimensions of the magazine, the graphical user interface comprising the selected location and the plurality of first storage locations.

In some implementations, the chemical product comprises ordinance, an explosive, or a precursor for the ordinance or the explosive. In some implementations, the graphical user interface displays an indication of compliance of the selected location with a predefined set of selection criteria. In some implementations, the graphical user interface comprises a selectable control element which, upon selection, selects a storage location contrary to the predefined storage location selection criteria, the selectable control element comprising a sub element to receive a waiver for the criteria.

In some implementations, the magazine comprises a plurality of structures; and the spatial map comprises corresponding containment levels for each of the plurality of structures. In some implementations, the plurality of structures comprises a temporary structure of a trailer and a permanent structure.

In some implementations, the one or more processors are configured to: obtain an identity of a third chemical product for retrieval from the magazine, a first attribute, and second attribute for the third chemical product; determine a second match between an identifier for the third chemical product and one or more of the first chemical products; select a second storage location based on the match, and the spatial dimensions of the first chemical products and the third chemical product; update, responsive to the selection of the second storage location, the spatial map to omit the third chemical product from the second storage location; and generate, based on the updated spatial map, a second instance of the graphical user interface corresponding to at least two spatial dimensions of the magazine, the graphical user interface indicating the second storage location as unoccupied.

In some implementations, the spatial map correlates the third chemical product to: a receiver identifier of a receiver of the third chemical product; a manufacturer identifier of a manufacturer of the third chemical product; and a received condition of the third chemical product; wherein the selection of the third chemical product is based on the receiver, the manufacturer, and the received condition.

In some implementations, selecting the storage location comprises a compatibility check between a type of one or more of the first chemical products with a type of the second chemical product.

In embodiments, a non-transitory computer-readable memory comprising instructions that, when executed by one or more processors, cause the one or more processors to: obtain a spatial map comprising a plurality of first storage locations corresponding to first chemical products of a magazine, the spatial map comprising, for the first chemical products: a first attribute of a spatial dimension; and a second attribute of an explosive yield; obtain an identity of a second chemical product received for storage in the magazine and a first attribute and second attribute for the second chemical product; determine a match between an identifier for the second chemical product and one or more of the first chemical products; compare a sum of the explosive yield of the first chemical products and an explosive yield for the second chemical product to threshold; select a storage location based on the match, the comparison to the threshold, and the spatial dimensions of the first chemical products and the second chemical product; generate a graphical user interface corresponding to at least two spatial dimensions of the magazine, the graphical user interface comprising the selected location and the plurality of first storage locations.

In some implementations, the instructions comprise instructions to: obtain an identity of a third chemical product for retrieval from the magazine, a first attribute, and second attribute for the third chemical product; determine a second match between an identifier for the third chemical product and one or more of the first chemical products; select a second storage location based on the match, and the spatial dimensions of the first chemical products and the third chemical product; update, responsive to the selection of the second storage location, the spatial map to omit the third chemical product from the second storage location; and generate, based on the updated spatial map, a second instance of the graphical user interface corresponding to at least two spatial dimensions of the magazine, the graphical user interface indicating the second storage location as unoccupied.

In embodiments, a computer-implemented method comprising: obtaining, by a computer, a spatial map comprising, for each of a plurality of chemical products of a magazine: a first attribute of a spatial dimension; a second attribute of an explosive yield; and a third attribute of a storage location: obtaining, by the computer, a first request to withdraw a first of the chemical products from the magazine, the first request comprising: an intended purpose for the first of the chemical products; and a first requester; identifying, by the computer, a first of the storage locations for the first of the chemical products by the computer, based on the first request, the first attribute, the second attribute, a withdrawer, the first requester, a condition upon withdrawal, and a unique identifier; generating, by the computer using the spatial map, a first instance of a graphical user interface corresponding to at least two spatial dimensions of the magazine, the graphical user interface indicating, with elevated prominence, the first of the storage locations; obtaining, by the computer, a second request to store the first of the chemical products in the magazine, the second request comprising: an updated condition of the first of the chemical products; and a second requester; and generating, by the computer using the spatial map, a second instance of the graphical user interface indicating a second of the storage locations selected based on the updated condition of the first of the chemical products.

In some implementations, the chemical products comprise ordinance. In some implementations, the spatial map correlates, with each of the chemical products: a total quantity of the ordinance, an expended quantity of the ordinance, an unexpended quantity of the ordinance, and a unit designator for a receiver of the first chemical product. In some implementations, the intended purpose corresponds to one of training exercises or kinetic operations. In some implementations, each of the chemical products stored in the magazine are designated for use in the training exercises or the kinetic operations; and the user interface comprises a control element configured to receive an instruction to reallocate ordinance between the training exercises and the kinetic operations.

In some implementations, the method further comprising: comparing, by the computer, a sum of the explosive yield of the first chemical products and an explosive yield for the second chemical product to a threshold; and selecting, by the computer, the second of the storage locations based on the match, the comparison to the threshold, and the spatial dimensions of the first chemical products and the second chemical product.

In some implementations, the selection of the first storage location is based on the threshold for the portion of the magazine comprising the first storage location. In some implementations, the magazine comprises a plurality of structures; and the spatial map comprises corresponding containment levels for each of the plurality of structures. In some implementations, the plurality of structures comprises a temporary structure of a trailer.

In embodiments, a system comprising a computing device having one or more processors coupled with memory, and configured to: obtain a spatial map comprising, for each of a plurality of chemical products of a magazine: a first attribute of a spatial dimension; a second attribute of an explosive yield; and a third attribute of a storage location: obtain a first request to withdraw a first of the chemical products from the magazine, the first request comprising: an intended purpose for the first of the chemical products; and a first requester; identify a first of the storage locations for the first of the chemical products by the computer, based on the first request, the first attribute, the second attribute, a withdrawer, the first requester, a condition upon withdrawal, and a unique identifier; generate, using the spatial map, a first instance of a graphical user interface corresponding to at least two spatial dimensions of the magazine, the graphical user interface indicating, with elevated prominence, the first of the storage locations; obtain a second request to store the first of the chemical products in the magazine, the second request comprising: an updated condition of the first of the chemical products; and a second requester; and generate, using the spatial map, a second instance of the graphical user interface indicating, with elevated prominence, a second of the storage locations selected based on the updated condition of the first of the chemical products.

In some implementations, the chemical products comprise ordinance. In some implementations, the spatial map correlates, with each of the chemical products: a total quantity of the ordinance, an expended quantity of the ordinance, an unexpended quantity of the ordinance, and a unit designator for a receiver of the first chemical product. In some implementations, the intended purpose corresponds to one of training exercises or kinetic operations.

In some implementations, each of the chemical products stored in the magazine are designated for use in the training exercises or the kinetic operations; and the user interface comprises a control element configured to receive an instruction to reallocate ordinance between the training exercises and the kinetic operations.

In some implementations, the one or more processors are configured to: compare a sum of the explosive yield of the first chemical products and an explosive yield for the second chemical product to a threshold; and select the second of the storage locations based on the match, the comparison to the threshold, and the spatial dimensions of the first chemical products and the second chemical product.

In some implementations, the selection of the first storage location is based on the threshold for the portion of the magazine comprising the first storage location. In some implementations, the magazine comprises a plurality of structures; and the spatial map comprises corresponding containment levels for each of the plurality of structures. In some implementations, the plurality of structures comprises a temporary structure of a trailer.

In embodiments, a non-transitory computer-readable memory comprising instructions that, when executed by one or more processors, cause the one or more processors to: obtain a spatial map comprising, for each of a plurality of chemical products of a magazine: a first attribute of a spatial dimension; a second attribute of an explosive yield; and a third attribute of a storage location: obtain a first request to withdraw a first of the chemical products from the magazine, the first request comprising: an intended purpose for the first of the chemical products; and a first requester; identify a first of the storage locations for the first of the chemical products, based on the first request, the first attribute, the second attribute, a withdrawer, the first requester, a condition upon withdrawal, and a unique identifier; generate, using the spatial map, a first instance of a graphical user interface corresponding to at least two spatial dimensions of the magazine, the graphical user interface indicating, with elevated prominence, the first of the storage locations; obtain a second request to store the first of the chemical products in the magazine, the second request comprising: an updated condition of the first of the chemical products; and a second requester; and generate, using the spatial map, a second instance of the graphical user interface indicating, with elevated prominence, a second of the storage locations selected based on the updated condition of the first of the chemical products.

In some implementations, the intended purpose corresponds to one of a training exercises or kinetic operations; each of the chemical products stored in the magazine are designated for use in the training exercises or the kinetic operations; and the user interface comprises a control element configured to receive an instruction to reallocate ordinance between the training exercises and the kinetic operations.

The foregoing method descriptions and the process flow diagrams are provided merely as illustrative examples and are not intended to require or imply that the steps of the various embodiments must be performed in the order presented. The steps in the foregoing embodiments may be performed in any order. Words such as "then," "next," etc. are not intended to limit the order of the steps; these words are simply used to guide the reader through the description of the methods. Although process flow diagrams may describe the operations as a sequential process, many of the operations may be performed in parallel or concurrently. In addition, the order of the operations may be re-arranged. A process may correspond to a method, a function, a procedure, a subroutine, a subprogram, and the like. When a process corresponds to a function, the process termination may correspond to a return of the function to a calling function or a main function.

References to "or" may be construed as inclusive so that any terms described using "or" may indicate any of a single, more than one, and all of the described terms. References to at least one of a conjunctive list of terms may be construed as an inclusive OR to indicate any of a single, more than one, and all of the described terms. For example, a reference to "at least one of 'A' and 'B'" can include only 'A', only 'B', as well as both 'A' and 'B'. Such references used in conjunction with "comprising" or other open terminology can include additional items.

The various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of this disclosure or the claims. For example, according to some implementations, the various user interface instances of the present disclosure may include configurable control elements as may be selected to display a subset of elements as may be useful for a particular use case.

Embodiments implemented in computer software may be implemented in software, firmware, middleware, microcode, hardware description languages, or any combination thereof. A code segment or machine-executable instructions may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, etc.

The actual software code or specialized control hardware used to implement these systems and methods is not limiting of the claimed features or this disclosure. Thus, the operation and behavior of the systems and methods were described without reference to the specific software code being understood that software and control hardware may be designed to implement the systems and methods based on the description herein.

When implemented in software, the functions may be stored as one or more instructions or code on a non-transitory computer-readable or processor-readable storage medium. The steps of a method or algorithm disclosed herein may be embodied in a processor-executable software module, which may reside on a computer-readable or processor-readable storage medium. A non-transitory computer-readable or processor-readable media includes both computer storage media and tangible storage media that facilitate transfer of a computer program from one place to another. A non-transitory processor-readable storage media may be any available media that may be accessed by a computer. By way of example, and not limitation, such non-transitory processor-readable media may comprise RAM, ROM, EEPROM, CD-ROM or other optical disk storage, magnetic disk storage or other magnetic storage devices, or any other tangible storage medium that may be used to store desired program code in the form of instructions or data structures and that may be accessed by a computer or processor. Disk and disc, as used herein, include compact disc (CD), laser disc, optical disc, digital versatile disc (DVD), floppy disk, and Blu-ray disc where disks usually reproduce data magnetically, while discs reproduce data optically with lasers. Combinations of the above should also be included within the scope of computer-readable media. Additionally, the operations of a method or algorithm may reside as one or any combination or set of codes and/or instructions on a non-transitory processor-readable medium and/or computer-readable medium, which may be incorporated into a computer program product.

The preceding description of the disclosed embodiments is provided to enable any person skilled in the art to make or use the embodiments described herein and variations thereof. Various modifications to these embodiments will be readily apparent to those skilled in the art, and the generic principles defined herein may be applied to other embodiments without departing from the spirit or scope of the subject matter disclosed herein. Thus, the present disclosure is not intended to be limited to the embodiments shown herein but is to be accorded the widest scope consistent with the following claims and the principles and novel features disclosed herein.

While various aspects and embodiments have been disclosed, other aspects and embodiments are contemplated. The various aspects and embodiments disclosed are for purposes of illustration and are not intended to be limiting, with the true scope and spirit being indicated by the following claims.

### EXAMPLES

Aspect 1. A computer-implemented method comprising: obtaining, by a computer, a spatial map comprising a plurality of first storage locations corresponding to first chemical products of a magazine the spatial map comprising, for the first chemical products: a first attribute of a spatial dimension; and a second attribute of an explosive yield; obtaining, by the computer, an identity of a second chemical product received for storage in the magazine and a first attribute and a second attribute for the second chemical product; generating, by the computer using the spatial map, a graphical user interface corresponding to at least two spatial dimensions of the magazine, the graphical user interface comprising: a first indication of the plurality of first storage locations for the first chemical products and one or more second storage locations; a second indication of at least one of the second storage locations as restricted according to predefined storage location selection criteria using the first and second attributes; and updating the spatial map by the computer responsive to a selection obtained via the graphical user interface the selection including an instruction assigning the second chemical product to a restricted location.

Aspect 2. The computer-implemented method of aspect 1, wherein the graphical user interface includes a selectable control element for indicating the mapping of the second chemical product to the restricted location.

Aspect 3. The computer-implemented method of aspect 2, wherein the selectable control element corresponds to a predefined duration of a waiver.

Aspect 4. The computer-implemented method of aspect 1, wherein the first chemical products and the second chemical product each comprises at least one of an ordinance, an explosive, or a precursor.

Aspect 5. The computer-implemented method of aspect 1, further comprising: selecting, by the computer, the one or more second storage locations based on a comparison between: a threshold of a containment level for a portion of the magazine; and a sum of the explosive yield of the second chemical product with the explosive yield of a plurality of the first chemical products disposed in the portion of the magazine according to the spatial map.

Aspect 6. The computer-implemented method of aspect 5, wherein: the spatial map includes corresponding containment levels a plurality of structures.

Aspect 7. The computer-implemented method of aspect 6, wherein: the plurality of structures comprises a temporary structure and a permanent structure.

Aspect 8. The computer-implemented method of aspect 5, wherein selecting the storage location comprises a compatibility check between a type of one or more of the first chemical products with a type of the second chemical product.

Aspect 9. The computer-implemented method of aspect 5, further comprising: executing, by the computer, an objective function to maximize a density of like chemical products in the magazine.

Aspect 10. The computer-implemented method of aspect 9, wherein each of the like chemical products is associated with one or more shared identifiers in a database.

Aspect 11. The computer-implemented method of aspect 1, further comprising: detecting, by the computer, a loss of connectivity between a computing device implementing the computer-implemented method and a remote server; updating, by the computer, locally, the spatial map to correspond to removals of the second chemical products or additions of third chemical products; and communicating, by the computer, responsive to a detected restoration of the connectivity, the updated spatial map to the remote server.

Aspect 12. A system comprising a computing device having at least one processor coupled with memory, and configured to: obtain a spatial map comprising a plurality of first storage locations corresponding to first chemical products of a magazine the spatial map comprising, for the first chemical products: a first attribute of a spatial dimension; and a second attribute of an explosive yield; obtain an identity of a second chemical product received for storage in the magazine and a first attribute and a second attribute for the second chemical product; generate, using the spatial map, a graphical user interface corresponding to at least two spatial dimensions of the magazine, the graphical user interface comprising: a first indication of the plurality of first storage locations for the first chemical products and one or more second storage locations; a second indication of at least one of the second storage locations as restricted according to predefined storage location selection criteria using the first and second attributes; and update the spatial map by the computer responsive to a selection obtained via the graphical user interface, the selecting including an instruction assigning the second chemical product to a restricted location.

Aspect 13. The system of aspect 12, wherein the graphical user interface includes a selectable control element for indicating the instruction for assigning the second chemical product to the restricted location.

Aspect 14. The system of aspect 12, wherein the first chemical products and the second chemical product each comprises at least one of an ordinance, an explosive, or a precursor.

Aspect 15. The system of aspect 12, further comprising: selecting, by the computer, the one or more second storage locations based on a comparison between: a threshold of a containment level for a portion of the magazine; and a sum of the explosive yield of the second chemical product with the explosive yield of a plurality of the first chemical products disposed in the portion of the magazine according to the spatial map.

Aspect 16. The system of aspect 15, wherein: the spatial map includes corresponding containment levels a plurality of structures.

Aspect 17. The system of aspect 16, wherein: the plurality of structures comprises a temporary structure and a permanent structure.

Aspect 18. The system of aspect 15, wherein selecting the storage location comprises a compatibility check between a type of one or more of the first chemical products with a type of the second chemical product.

Aspect 19. The system of aspect 15, further comprising: executing, by the computer, an objective function to maximize a density of like chemical products in the magazine, wherein each of the like chemical products is associated with one or more shared identifiers in a database.

Aspect 20. The system of aspect 12, further comprising: detecting, by the computer, a loss of connectivity between the computing device and a remote server; updating, by the computer, locally, the spatial map to correspond to removals of the second chemical products or additions of third chemical products; and communicating, by the computer, responsive to a detected restoration of the connectivity, the updated spatial map to the remote server.

Aspect 21. A computer-implemented method comprising: obtaining, by a computer, a spatial map comprising a plurality of first storage locations corresponding to first chemical products of a magazine, the spatial map comprising, for the first chemical products: a first attribute of a spatial dimension; and a second attribute of an explosive yield; obtaining, by the computer, an identity of a second chemical product received for storage in the magazine and a first attribute and second attribute for the second chemical product; determining, by the computer, a match between an identifier for the second chemical product and one or more of the first chemical products; comparing, by the computer, a sum of the explosive yield of the first chemical products and an explosive yield for the second chemical product to threshold; selecting, by the computer, a storage location based on the match, the comparison to the threshold, and the spatial dimensions of the first chemical products and the second chemical product; generating, by the computer, a graphical user interface corresponding to at least two spatial dimensions of the magazine, the graphical user interface comprising the selected location and the plurality of first storage locations.

Aspect 22. The computer-implemented method of aspect 21, wherein the chemical product comprises ordinance, an explosive, or a precursor for the ordinance or the explosive.

Aspect 23. The computer-implemented method of aspect 21, wherein the graphical user interface displays an indication of compliance of the selected location with a predefined set of selection criteria.

Aspect 24. The computer-implemented method of aspect 23, wherein the graphical user interface comprises a selectable control element which, upon selection, selects a storage location contrary to the predefined storage location selection criteria, the selectable control element comprising a sub element to receive a waiver for the criteria.

Aspect 25. The computer-implemented method of aspect 21, wherein: the magazine comprises a plurality of structures; and the spatial map comprises corresponding containment levels for each of the plurality of structures.

Aspect 26. The computer-implemented method of aspect 25, wherein: the plurality of structures comprises a temporary structure of a trailer and a permanent structure.

Aspect 27. The computer-implemented method of aspect 21, further comprising: obtaining, by the computer, an identity of a third chemical product for retrieval from the magazine, a first attribute, and second attribute for the third chemical product; determining, by the computer, a second match between an identifier for the third chemical product and one or more of the first chemical products; selecting, by the computer, a second storage location based on the match, and the spatial dimensions of the first chemical products and the third chemical product; updating by the computer, responsive to the selection of the second storage location, the spatial map to omit the third chemical product from the second storage location; and generating, by the computer, based on the updated spatial map, a second instance of the graphical user interface corresponding to at least two spatial dimensions of the magazine, the graphical user interface indicating the second storage location as unoccupied.

Aspect 28. The computer-implemented method of aspect 27, wherein the spatial map correlates the third chemical product to: a receiver identifier of a receiver of the third chemical product; a manufacturer identifier of a manufacturer of the third chemical product; and a received condition of the third chemical product; wherein the selection of the third chemical product is based on the receiver, the manufacturer, and the received condition.

Aspect 29. The computer-implemented method of aspect 21, wherein selecting the storage location comprises a compatibility check between a type of one or more of the first chemical products with a type of the second chemical product.

Aspect 30. A system comprising a computing device having one or more processors coupled with memory, and configured to: obtain a spatial map comprising a plurality of first storage locations corresponding to first chemical products of a magazine, the spatial map comprising, for the first chemical products: a first attribute of a spatial dimension; and a second attribute of an explosive yield; obtain an identity of a second chemical product received for storage in the magazine and a first attribute and second attribute for the second chemical product; determine a match between an identifier for the second chemical product and one or more of the first chemical products; compare a sum of the explosive yield of the first chemical products and an explosive yield for the second chemical product to threshold; select a storage location based on the match, the comparison to the threshold, and the spatial dimensions of the first chemical products and the second chemical product; generate a graphical user interface corresponding to at least two spatial dimensions of the magazine, the graphical user interface comprising the selected location and the plurality of first storage locations.

Aspect 31. The system of aspect 30, wherein the chemical product comprises ordinance, an explosive, or a precursor for the ordinance or the explosive.

Aspect 32. The system of aspect 30, wherein the graphical user interface displays an indication of compliance of the selected location with a predefined set of selection criteria.

Aspect 33. The system of aspect 32, wherein the graphical user interface comprises a selectable control element which, upon selection, selects a storage location contrary to the predefined storage location selection criteria, the selectable control element comprising a sub element to receive a waiver for the criteria.

Aspect 34. The system of aspect 30, wherein: the magazine comprises a plurality of structures; and the spatial map comprises corresponding containment levels for each of the plurality of structures.

Aspect 35. The system of aspect 34, wherein: the plurality of structures comprises a temporary structure of a trailer and a permanent structure.

Aspect 36. The system of aspect 30, wherein the one or more processors are configured to: obtain an identity of a third chemical product for retrieval from the magazine, a first attribute, and second attribute for the third chemical product; determine a second match between an identifier for the third chemical product and one or more of the first chemical products; select a second storage location based on the match, and the spatial dimensions of the first chemical products and the third chemical product; update, responsive to the selection of the second storage location, the spatial map to omit the third chemical product from the second storage location; and generate, based on the updated spatial map, a second instance of the graphical user interface corresponding to at least two spatial dimensions of the magazine, the graphical user interface indicating the second storage location as unoccupied.

Aspect 37. The system of aspect 36, wherein the spatial map correlates the third chemical product to: a receiver identifier of a receiver of the third chemical product; a manufacturer identifier of a manufacturer of the third chemical product; and a received condition of the third chemical product; wherein the selection of the third chemical product is based on the receiver, the manufacturer, and the received condition.

Aspect 38. The system of aspect 30, wherein selecting the storage location comprises a compatibility check between a type of one or more of the first chemical products with a type of the second chemical product.

Aspect 39. A non-transitory computer-readable memory comprising instructions that, when executed by one or more processors, cause the one or more processors to: obtain a spatial map comprising a plurality of first storage locations corresponding to first chemical products of a magazine, the spatial map comprising, for the first chemical products: a first attribute of a spatial dimension; and a second attribute of an explosive yield; obtain an identity of a second chemical product received for storage in the magazine and a first attribute and second attribute for the second chemical product; determine a match between an identifier for the second chemical product and one or more of the first chemical products; compare a sum of the explosive yield of the first chemical products and an explosive yield for the second chemical product to threshold; select a storage location based on the match, the comparison to the threshold, and the spatial dimensions of the first chemical products and the second chemical product; generate a graphical user interface corresponding to at least two spatial dimensions of the magazine, the graphical user interface comprising the selected location and the plurality of first storage locations.

Aspect 40. The non-transitory computer-readable memory of aspect 39, wherein the instructions comprise instructions to: obtain an identity of a third chemical product for retrieval from the magazine, a first attribute, and second attribute for the third chemical product; determine a second match between an identifier for the third chemical product and one or more of the first chemical products; select a second storage location based on the match, and the spatial dimensions of the first chemical products and the third chemical product; update, responsive to the selection of the second storage location, the spatial map to omit the third chemical product from the second storage location; and generate, based on the updated spatial map, a second instance of the graphical user interface corresponding to at least two spatial dimensions of the magazine, the graphical user interface indicating the second storage location as unoccupied.

Aspect 41. A computer-implemented method comprising: obtaining, by a computer, a spatial map comprising, for each of a plurality of chemical products of a magazine: a first attribute of a spatial dimension; a second attribute of an explosive yield; and a third attribute of a storage location: obtaining, by the computer, a first request to withdraw a first of the chemical products from the magazine, the first request comprising: an intended purpose for the first of the chemical products; and a first requester; identifying, by the computer, a first of the storage locations for the first of the chemical products by the computer, based on the first request, the first attribute, the second attribute, a withdrawer, the first requester, a condition upon withdrawal, and a unique identifier; generating, by the computer using the spatial map, a first instance of a graphical user interface corresponding to at least two spatial dimensions of the magazine, the graphical user interface indicating, with elevated prominence, the first of the storage locations; obtaining, by the computer, a second request to store the first of the chemical products in the magazine, the second request comprising: an updated condition of the first of the chemical products; and a second requester; and generating, by the computer using the spatial map, a second instance of the graphical user interface indicating a second of the storage locations selected based on the updated condition of the first of the chemical products.

Aspect 42. The computer-implemented method of aspect 41, wherein the chemical products comprise ordinance.

Aspect 43. The computer-implemented method of aspect 42, wherein the spatial map correlates, with each of the chemical products: a total quantity of the ordinance, an expended quantity of the ordinance, an unexpended quantity of the ordinance, and a unit designator for a receiver of the first chemical product.

Aspect 44. The computer-implemented method of aspect 41, wherein: the intended purpose corresponds to one of training exercises or kinetic operations.

Aspect 45. The computer-implemented method of aspect 44, wherein: each of the chemical products stored in the magazine are designated for use in the training exercises or the kinetic operations; and the user interface comprises a control element configured to receive an instruction to reallocate ordinance between the training exercises and the kinetic operations.

Aspect 46. The computer-implemented method of aspect 41, further comprising: comparing, by the computer, a sum of the explosive yield of the first chemical products and an explosive yield for the second chemical product to a threshold; and selecting, by the computer, the second of the storage locations based on the match, the comparison to the threshold, and the spatial dimensions of the first chemical products and the second chemical product.

Aspect 47. The computer-implemented method of aspect 46, wherein the selection of the first storage location is based on the threshold for the portion of the magazine comprising the first storage location.

Aspect 48. The computer-implemented method of aspect 41, wherein: the magazine comprises a plurality of structures; and the spatial map comprises corresponding containment levels for each of the plurality of structures.

Aspect 49. The computer-implemented method of aspect 48, wherein: the plurality of structures comprises a temporary structure of a trailer.

Aspect 50. A system comprising a computing device having one or more processors coupled with memory, and configured to: obtain a spatial map comprising, for each of a plurality of chemical products of a magazine: a first attribute of a spatial dimension; a second attribute of an explosive yield; and a third attribute of a storage location: obtain a first request to withdraw a first of the chemical products from the magazine, the first request comprising: an intended purpose for the first of the chemical products; and a first requester; identify a first of the storage locations for the first of the chemical products by the computer, based on the first request, the first attribute, the second attribute, a withdrawer, the first requester, a condition upon withdrawal, and a unique identifier; generate, using the spatial map, a first instance of a graphical user interface corresponding to at least two spatial dimensions of the magazine, the graphical user interface indicating, with elevated prominence, the first of the storage locations; obtain a second request to store the first of the chemical products in the magazine, the second request comprising: an updated condition of the first of the chemical products; and a second requester; and generate, using the spatial map, a second instance of the graphical user interface indicating, with elevated prominence, a second of the storage locations selected based on the updated condition of the first of the chemical products.

Aspect 51. The system of aspect 50, wherein the chemical products comprise ordinance.

Aspect 52. The system of aspect 51, wherein the spatial map correlates, with each of the chemical products: a total quantity of the ordinance, an expended quantity of the ordinance, an unexpended quantity of the ordinance, and a unit designator for a receiver of the first chemical product.

Aspect 53. The system of aspect 50, wherein: the intended purpose corresponds to one of training exercises or kinetic operations.

Aspect 54. The system of aspect 53, wherein: each of the chemical products stored in the magazine are designated for use in the training exercises or the kinetic operations; and the user interface comprises a control element configured to receive an instruction to reallocate ordinance between the training exercises and the kinetic operations.

Aspect 55. The system of aspect 50, wherein the one or more processors are configured to: compare a sum of the explosive yield of the first chemical products and an explosive yield for the second chemical product to a threshold; and select the second of the storage locations based on the match, the comparison to the threshold, and the spatial dimensions of the first chemical products and the second chemical product.

Aspect 56. The system of aspect 55, wherein the selection of the first storage location is based on the threshold for the portion of the magazine comprising the first storage location.

Aspect 57. The system of aspect 50, wherein: the magazine comprises a plurality of structures; and the spatial map comprises corresponding containment levels for each of the plurality of structures.

Aspect 58. The system of aspect 57, wherein: the plurality of structures comprises a temporary structure of a trailer.

Aspect 59. A non-transitory computer-readable memory comprising instructions that, when executed by one or more processors, cause the one or more processors to: obtain a spatial map comprising, for each of a plurality of chemical products of a magazine: a first attribute of a spatial dimension; a second attribute of an explosive yield; and a third attribute of a storage location: obtain a first request to withdraw a first of the chemical products from the magazine, the first request comprising: an intended purpose for the first of the chemical products; and a first requester; identify a first of the storage locations for the first of the chemical products, based on the first request, the first attribute, the second attribute, a withdrawer, the first requester, a condition upon withdrawal, and a unique identifier; generate, using the spatial map, a first instance of a graphical user interface corresponding to at least two spatial dimensions of the magazine, the graphical user interface indicating, with elevated prominence, the first of the storage locations; obtain a second request to store the first of the chemical products in the magazine, the second request comprising: an updated condition of the first of the chemical products; and a second requester; and generate, using the spatial map, a second instance of the graphical user interface indicating, with elevated prominence, a second of the storage locations selected based on the updated condition of the first of the chemical products.

Aspect 60. The non-transitory computer-readable memory of aspect 59, wherein: the intended purpose corresponds to one of a training exercises or kinetic operations; each of the chemical products stored in the magazine are designated for use in the training exercises or the kinetic operations; and the user interface comprises a control element configured to receive an instruction to reallocate ordinance between the training exercises and the kinetic operations.

## Claims

1. A computer-implemented method comprising:
obtaining, by a computer, a spatial map comprising a plurality of first storage locations corresponding to first chemical products of a magazine the spatial map comprising, for the first chemical products:
a first attribute of a spatial dimension; and
a second attribute of an explosive yield;
obtaining, by the computer, an identity of a second chemical product received for storage in the magazine and a first attribute and a second attribute for the second chemical product;
generating, by the computer using the spatial map, a graphical user interface corresponding to at least two spatial dimensions of the magazine, the graphical user interface comprising:
a first indication of the plurality of first storage locations for the first chemical products and one or more second storage locations;
a second indication of at least one of the second storage locations as restricted according to predefined storage location selection criteria using the first and second attributes; and
updating the spatial map by the computer responsive to a selection obtained via the graphical user interface the selection including an instruction assigning the second chemical product to a restricted location.

2. The computer-implemented method of claim **1,** wherein the graphical user interface includes a selectable control element for indicating the mapping of the second chemical product to the restricted location; preferably wherein the selectable control element corresponds to a predefined duration of a waiver.

3. The computer-implemented method of claim **1 or 2,** wherein the first chemical products and the second chemical product each comprises at least one of an ordinance, an explosive, or a precursor.

4. The computer-implemented method of any one of the preceding claims, further comprising:
selecting, by the computer, the one or more second storage locations based on a comparison between:
a threshold of a containment level for a portion of the magazine; and
a sum of the explosive yield of the second chemical product with the explosive yield of a plurality of the first chemical products disposed in the portion of the magazine according to the spatial map.

5. The computer-implemented method of claim 4, wherein:
the spatial map includes corresponding containment levels a plurality of structures; preferably wherein the plurality of structures comprises a temporary structure and a permanent structure.

6. The computer-implemented method of claim **4 or 5,** wherein selecting the storage location comprises a compatibility check between a type of one or more of the first chemical products with a type of the second chemical product.

7. The computer-implemented method of any one of claims **4 to 6,** further comprising:
executing, by the computer, an objective function to maximize a density of like chemical products in the magazine; preferably wherein each of the like chemical products is associated with one or more shared identifiers in a database.

8. The computer-implemented method of any one of the preceding claims, further comprising:
detecting, by the computer, a loss of connectivity between a computing device implementing the computer-implemented method and a remote server;
updating, by the computer, locally, the spatial map to correspond to removals of the second chemical products or additions of third chemical products; and
communicating, by the computer, responsive to a detected restoration of the connectivity, the updated spatial map to the remote server.

9. A system comprising a computing device having at least one processor coupled with memory, and configured to:
obtain a spatial map comprising a plurality of first storage locations corresponding to first chemical products of a magazine the spatial map comprising, for the first chemical products:
a first attribute of a spatial dimension; and
a second attribute of an explosive yield;
obtain an identity of a second chemical product received for storage in the magazine and a first attribute and a second attribute for the second chemical product;
generate, using the spatial map, a graphical user interface corresponding to at least two spatial dimensions of the magazine, the graphical user interface comprising:
a first indication of the plurality of first storage locations for the first chemical products and one or more second storage locations;
a second indication of at least one of the second storage locations as restricted according to predefined storage location selection criteria using the first and second attributes; and
update the spatial map by the computer responsive to a selection obtained via the graphical user interface, the selecting including an instruction assigning the second chemical product to a restricted location.

10. The system of claim **9,** wherein the graphical user interface includes a selectable control element for indicating the instruction for assigning the second chemical product to the restricted location.

11. The system of claim **9 or 10,** wherein the first chemical products and the second chemical product each comprises at least one of an ordinance, an explosive, or a precursor.

12. The system of any one of claims **9 to 11,** further comprising:
selecting, by the computer, the one or more second storage locations based on a comparison between:
a threshold of a containment level for a portion of the magazine; and
a sum of the explosive yield of the second chemical product with the explosive yield of a plurality of the first chemical products disposed in the portion of the magazine according to the spatial map.

13. The system of claim **12,** wherein:
the spatial map includes corresponding containment levels a plurality of structures; preferably wherein the plurality of structures comprises a temporary structure and a permanent structure.

14. The system of claim **12 or 13,** wherein selecting the storage location comprises a compatibility check between a type of one or more of the first chemical products with a type of the second chemical product; and/or
the system further comprises:
executing, by the computer, an objective function to maximize a density of like chemical products in the magazine, wherein each of the like chemical products is associated with one or more shared identifiers in a database.

15. The system of any one of claims **9 to 14,** further comprising:
detecting, by the computer, a loss of connectivity between the computing device and a remote server;
updating, by the computer, locally, the spatial map to correspond to removals of the second chemical products or additions of third chemical products; and
communicating, by the computer, responsive to a detected restoration of the connectivity, the updated spatial map to the remote server.
